(19) Europäisches Patentamt / European Patent Office / Office européen des brevets

(11) **EP 3 092 438 B1**

(12) **EUROPÄISCHE PATENTSCHRIFT**

(45) Veröffentlichungstag und Bekanntmachung des Hinweises auf die Patenterteilung:
**24.02.2021 Patentblatt 2021/08**

(21) Anmeldenummer: **14821557.7**

(22) Anmeldetag: **15.12.2014**

(51) Int Cl.:
*F21S 41/675* (2018.01)    *F21S 41/36* (2018.01)
*B60Q 1/08* (2006.01)

(86) Internationale Anmeldenummer:
**PCT/EP2014/077756**

(87) Internationale Veröffentlichungsnummer:
**WO 2015/104143 (16.07.2015 Gazette 2015/28)**

(54) **LEUCHTVORRICHTUNG MIT MIKROSPIEGELN FÜR EIN KRAFTFAHRZEUG UND VERFAHREN ZUR STEUERUNG DER LEUCHTVORRICHTUNG**

LIGHTING APPARATUS WITH MICRO-MIRRORS FOR A VEHICLE AND METHOD FOR CONTROLLING THE APPARATUS

APPAREIL D'ÉCLAIRAGE AVEC MICRO-MIROIRS POUR UN VÉHICULE ET PROCÉDÉ DE CONTRÔLE DE L'APPAREIL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.01.2014 DE 102014200029**
**09.12.2014 DE 102014225246**

(43) Veröffentlichungstag der Anmeldung:
**16.11.2016 Patentblatt 2016/46**

(73) Patentinhaber: **Volkswagen Aktiengesellschaft 38440 Wolfsburg (DE)**

(72) Erfinder:
• **MIEMIETZ, Stefan**
**14612 Falkensee (DE)**
• **MEYER, Benjamin**
**38448 Wolfsburg (DE)**
• **LIEBEHENSCHEL, Daniel**
**13507 Berlin (DE)**

(56) Entgegenhaltungen:
| | |
|---|---|
| EP-A1- 2 143 992 | CN-A- 102 705 767 |
| CN-U- 202 419 429 | DE-A1- 19 737 653 |
| DE-A1-102010 048 659 | DE-A1-102011 052 184 |
| US-A1- 2004 218 401 | |

**Beschreibung**

Die Erfindung betrifft eine Leuchtvorrichtung für ein Kraftfahrzeug, welche eine Lichtumlenkeinheit aufweist, die mindestens zwei unabhängig voneinander elektronisch ansteuerbare, in ihrer Raumausrichtung per Ansteuerung ausrichtbare Lichtumlenkelemente umfasst, wobei die Lichtumlenkelemente in einer ersten Ansteuerposition dazu ausgebildet sind, auf sie treffendes Licht in einer durch ihre Raumausrichtung vorbestimmten Richtung umzulenken, wodurch ein erstes Lichtbild mit einer variablen und einstellbaren Lichtverteilung bereitstellbar ist sowie ein Verfahren zur Steuerung einer erfindungsgemäßen Leuchtvorrichtung als auch ein Kraftfahrzeug mit einer erfindungsgemäßen Leuchtvorrichtung.

Schon seit längerer Zeit wird nach effizienten Realisierungsmöglichkeiten für vollvariable Lichtverteilungen in den Schweinwerfern von Kraftfahrzeugen gesucht. Im Stand der Technik existieren vor diesem Hintergrund bereits einige Ansätze, bei welchen versucht wird, auf Mikrospiegelaktorik basierende Konzepte für die Verwendung im Kraftfahrzeug nutzbar zu machen. Mikrospiegelaktoren wie beispielsweise sogenannte Digital-Light-Processing(DLP)-Projektoren sind aus dem Medienbereich bekannt und kommen zum Beispiel bereits in Kinoprojektoren zum Einsatz. Auch die Verwendung in Kraftfahrzeugen ist dem Stand der Technik bereits bekannt. Beispielsweise ist in der DE 103 44 173 A1 ein Scheinwerfer für Fahrzeuge mit mindestens einer Lichtquelle und einer Lichtführungseinheit zur Erzeugung mindestens einer vorgegebenen Lichtverteilung offenbart, wobei die Lichtführungseinheit eine Umlenkfläche mit Mikrospiegeln aufweist und wobei der Umlenkfläche eine Konzentrationseinheit vorgelagert ist. Mit diesem Scheinwerfer ist es möglich, ein Lichtbild mit einer einstellbaren Lichtverteilung zu generieren und auf beispielsweise eine Straße zu projizieren. Auch aus der US 6,497,503 B1 ist ein Leuchtensystem für ein Kraftfahrzeug bekannt, in welchem eine Mikrospiegelvorrichtung zum Einsatz kommt, wobei in einem Mikroprozessor eine Vielzahl an Ansteuermustern abgelegt sind, mit welchen die Mikrospiegel der Mikrospiegelvorrichtung zur Erzeugung eines jeweiligen Beleuchtungsmusters in eine vorbestimmte Positionen bewegbar sind.

Bildgebendes Element bei solchen Mikrospiegelaktoren, wie den bereits erwähnten DLP-Projektoren, sind schnelle, elektrostatisch bewegte Mikrospiegel, wobei je Pixel ein Mikrospiegel vorgesehen ist. Das Dimmen beziehungsweise Abschalten eines einzelnen Pixels erfolgt bei den Ansätzen des Standes der Technik durch eine Ablenkung des für die Projektion nicht benötigten Lichtes auf einen Auffangblock, welcher auch als Beam-Stopp bezeichnet wird. Die zur Bestrahlung der Mikrospiegel verwandte Lichtquelle leuchtet also stets mit voller Leistung weiter, auch wenn das erzeugte beziehungsweise zu erzeugende Lichtbild vollkommen schwarz ist. Aus diesem Grund sind die derzeit im Stand der Technik existierenden Mikrospiegelaktor-Anwendungen im Kraftfahrzeug vergleichsweise ineffizient. Eine solche Anwendung beschreibt die DE 10 2010 048 659 A1, welche eine Beleuchtungseinrichtung für ein Kraftfahrzeug offenbart, die eine Mikrospiegelanordnung, ein erstes und ein zweites optisches Element sowie einen Absorber aufweist. Licht, welches mittels der Mikrospiegelanordnung nicht auf das erste oder das zweite optische Element umgelenkt wird, wird zur Vernichtung auf den Absorber reflektiert.

Aus US 2004/0218401 A1 ist eine Leuchtvorrichtung bekannt, bei der eine Lichtstromlenkeinheit eine Vielzahl von Mikrospiegeln aufweist, die je nach Ansteuerung der Mikrospiegel das Licht als Licht mit einem ersten Lichtbild und als Lichtbild einem zweiten Lichtbild abstrahlt. Das Licht für das zweite Lichtbild wird hierbei über einen Spiegel in eine zylindrische Linse und eine integrierende Linse geführt, so dass eine horizontale Ausrichtung des vom Spiegel reflektierten Lichtes erfolgt.

CN 202 419 429 U offenbart eine Leuchtvorrichtung für ein Kraftfahrzeug mit einer Lichtumlenkeinheit, mittels der ein erstes Lichtbild und ein zweites Lichtbild erzeugt werden kann. Zur Erzeugung des zweiten Lichtbildes ist ein lichtformendes Element mit einem vorgeschalteten Demodulationselement, das als Lichtleiter ausgebildet ist, vorgesehen.

Der Erfindung liegt nun die Aufgabe zugrunde, eine Leuchtvorrichtung für ein Kraftfahrzeug mit einer Lichtumlenkeinheit bereitzustellen, in welcher das nicht für die primäre Projektion benötigte Licht für die Bereitstellung eines statischen Lichtbildes genutzt wird und die Effizienz der Leuchtvorrichtung gegenüber dem Stand der Technik erhöht ist.

Erfindungsgemäß wird die Aufgabe durch eine Leuchtvorrichtung mit den in Anspruch 1 genannten Merkmalen sowie durch ein Verfahren mit den in Anspruch 8 genannten Merkmalen gelöst.

Erfindungsgemäß wird eine Leuchtvorrichtung für ein Kraftfahrzeug zur Verfügung gestellt, welche eine Lichtumlenkeinheit umfasst, die mindestens zwei unabhängig voneinander elektronisch ansteuerbare, in ihrer Raumausrichtung per Ansteuerung ausrichtbare Lichtumlenkelemente aufweist, wobei die Lichtumlenkelemente in einer ersten Ansteuerposition dazu ausgebildet sind, auf sie treffendes Licht in einer durch ihre Raumausrichtung vorbestimmten Richtung umzulenken, wodurch ein erstes, veränderliches Lichtbild mit einer variablen und einstellbaren Lichtverteilung bereitstellbar ist. Des Weiteren umfasst die Leuchtvorrichtung eine Lichtquelle, mittels welcher Licht in die Lichtumlenkeinheit einstrahlbar ist. Erfindungsgemäß umfasst die Leuchtvorrichtung ferner ein lichtformendes Element und ist mindestens ein Lichtumlenkelement in einer zweiten Ansteuerposition dazu ausgebildet, Licht in das lichtformende Elemente umzulenken, wobei das lichtformende Element dazu ausgebildet ist, in selbiges eingestrahltes Licht als ein zweites Lichtbild mit stets gleichbleibender Lichtverteilung bereitzustellen, wobei von der Lichtquelle in die Lichtumlenkeinheit eingestrahltes Licht zu jedem Zeitpunkt vollständig für die Bereitstellung des ersten und/oder zweiten Lichtbildes genutzt wird.

Erfindungsgemäß ist das lichtformende Element als Projektionslinse oder als Projektionsoptik mit einem vorgeschalteten Demodulationselement, das mindestens zwei unabhängig voneinander elektronisch ansteuerbare, in ihrer Raumausrichtung per Ansteuerung ausrichtbare Lichtumlenkelemente umfasst, ausgeführt. In einer derartigen Ausführungsform ist das lichtformende Element derart gestaltet, dass das von dem lichtformenden Element bereitstellbare zweite Lichtbild stets die gleiche Lichtverteilung aufweist, unabhängig von der Lichtverteilung des ersten Lichtbildes und unabhängig davon, an welchem Punkt das lichtformende Element von einem umgelenkten Lichtstrahl beziehungsweise Lichtbündel getroffen wird. Bevorzugt ist das lichtformende Element als mindestens ein Lichtleitelement oder als eine Streuscheibe oder als ein optischer Integrator, also als ein speziell geformter Lichtleiter, ausgeführt. Je nachdem, welches Muster beziehungsweise welche Lichtverteilung das erste Lichtbild aufweist, ändert sich bei einer derartigen Ausführung die Helligkeit des zweiten Lichtbildes, aber nicht dessen Lichtverteilung, also dessen Form. Ferner bevorzugt ist die Projektionsoptik als Spiegel beziehungsweise als ein einen Spiegel aufweisendes Bauelement ausgeführt.

Bevorzugt umfasst die Leuchtvorrichtung eine Lichtumlenkeinheit, welche mindestens zwei unabhängig voneinander elektronisch ansteuerbare, in ihrer Raumausrichtung per Ansteuerung ausrichtbare Lichtumlenkelemente aufweist, wobei die Lichtumlenkelemente in einer ersten vorbestimmten Ansteuerabfolge beziehungsweise Ansteuerung dazu ausgebildet sind, auf sie treffendes Licht in durch ihre Raumausrichtungen vorbestimmte Richtungen umzulenken, wodurch ein erstes, veränderliches Lichtbild mit einer variablen und einstellbaren Lichtverteilung bereitstellbar ist. Ferner weist die Leuchtvorrichtung eine Lichtquelle auf, mittels welcher Licht in die Lichtumlenkeinheit einstrahlbar ist. Erfindungsgemäß umfasst die Leuchtvorrichtung ferner ein lichtformendes Element und ist mindestens ein Lichtumlenkelement in einer zweiten vorbestimmten Ansteuerabfolge beziehungsweise Ansteuerung dazu ausgebildet, Licht in das lichtformende Elemente umzulenken, wobei das lichtformende Element dazu ausgebildet ist, in selbiges eingestrahltes Licht als ein zweites Lichtbild mit stets gleichbleibender Lichtverteilung bereitzustellen, wobei von der Lichtquelle in die Lichtumlenkeinheit eingestrahltes Licht zu jedem Zeitpunkt vollständig für die Bereitstellung des ersten und/oder zweiten Lichtbildes genutzt wird.

Bevorzugt wird also von der Lichtquelle in die Lichtumlenkeinheit eingestrahltes Licht ganzheitlich für die Darstellung des ersten und/oder zweiten Lichtbildes verwandt, so dass kein von der Lichtquelle generiertes Licht auf einen Auffangblock oder einen Beam-Stopp gelenkt wird. Bevorzugt wird von der Lichtquelle generiertes und in die Lichtumlenkeinheit eingestrahltes Licht zur Darstellung beziehungsweise Bereitstellung des ersten und/oder zur Darstellung beziehungsweise Bereitstellung des zweiten Lichtbildes verwandt, so dass stets das gesamte von der Lichtquelle generierte Licht für die Darstellung beziehungsweise Bereitstellung des ersten und/oder zweiten Lichtbildes genutzt wird.

Der Vorteil einer derartigen Leuchtvorrichtung ist ihre, verglichen mit den dem Stand der Technik bekannten Lösungen, hohe Effizienz. Anstatt das für die Projektion des ersten Lichtbildes nicht benötigte Licht auf einen Auffangblock, also einen sogenannten Beam-Stopp zu lenken, wird das für die Projektion des ersten Lichtbildes nicht benötigte Licht bei der erfindungsgemäßen Leuchtvorrichtung auf ein lichtformendes Element gelenkt und somit für die Bereitstellung des zweiten Lichtbildes genutzt. Ferner ermöglicht die Leuchtvorrichtung in vorteilhafter Weise die Bereitstellung von sowohl einem dynamischen, veränderlichen ersten Lichtbild als auch von einem statischen zweiten Lichtbild mit lediglich einer Leuchtvorrichtung. Somit können sowohl Kosten eingespart als auch der im Kraftfahrzeug für den Verbau der Leuchtvorrichtung benötigte Bauraum verringert werden.

Bevorzugt umfasst eine Ansteuerposition eine vorbestimmte Abfolge von Positionen, Stellungen beziehungsweise Ausrichtungen mindestens eines Lichtumlenkelementes.

Bevorzugt handelt es sich bei dem zweiten Lichtbild um eine Grundlichtverteilung oder um eine Tagfahrlichtsignatur. Ferner bevorzugt handelt es sich bei dem ersten Lichtbild um ein Autobahnlicht, ein Schlechtwetterlicht, ein Displaylicht, beispielsweise um einen auf eine Richtungsfahrbahn projizierbaren Pfeil, um ein Markierungslicht, eine Vorfeldausleuchtung, ein Abblendlicht, ein Fernlicht, ein Positionslicht, ein Kurvenlicht, ein Berg- und Talfahrlicht oder um ein beliebiges sonstiges Licht. Ferner bevorzugt ist mittels der Kombination aus dem lichtformenden Element und der Lichtumlenkeinheit eine beliebige Hell-Dunkel-Grenze für das zweite Lichtbild einstellbar und ist eine Leuchtweitenregelung für das zweite Lichtbild realisierbar. In einer derartigen Ausführungsform kann jede für den Straßenverkehr notwendige Lichtfunktion mittels der erfindungsgemäßen Leuchtvorrichtung bereitgestellt werden.

Vorzugsweise ist die Lichtumlenkeinheit als Mikrospiegelaktor ausgeführt und sind die Lichtumlenkelemente als Mikrospiegel ausgeführt. Besonders bevorzugt handelt es sich bei der Lichtumlenkeinheit um einen Digital-Light-Processing-Projektor, also um einen DLP-Projektor, welcher erfindungsgemäß ausgeführt ist, also keinen Beam-Stopp sondern ein lichtformendes Element umfasst. Ferner bevorzugt umfasst die Leuchtvorrichtung einen Digital-Light-Processing-Projektor, also einen DLP-Projektor, welcher erfindungsgemäß ausgeführt ist, also keinen Beam-Stopp sondern ein lichtformendes Element umfasst. In einer derartigen Ausführungsform ist die Projektion eines hoch aufgelösten, bewegten Bildes mit einem sehr kompakten Bauelement möglich, welches lediglich die Abmessungen eines Computerchips aufweist.

Bevorzugt wird von der Lichtquelle generiertes Licht, welches nicht zur Bereitstellung des ersten Lichtbildes genutzt wird mittels mindestens eines Lichtumlenkelementes in das lichtformende Element umgelenkt. In einer derartigen Ausführungsform wird das gesamte von der Lichtquelle generierte Licht zu jedem Zeitpunkt voll genutzt. Dies führt zu einer signifikanten Einsparung von Energie bei gleichzeitiger Erhöhung des Wirkungsgerades, also der Effizienz der Leuchtvorrichtung. In einer solchen Ausführungsform wird Licht, welches nicht zur Bereitstellung des ersten Lichtbildes genutzt wird mittels mindestens eines Lichtumlenkelementes in das lichtformende Element umgelenkt und so zur Bereitstellung des zweiten Lichtbildes genutzt.

Bevorzugt sind die Lichtumlenkelemente als optische Schalter ausgeführt. Ferner bevorzugt sind die Lichtumlenkelemente als Flüssigkristallfolien ausgeführt, welche dazu ausgebildet sind, bei dem Anlegen einer Spannung Licht unterschiedlicher Polarisation in verschiedene, durch die angelegte Spannung vorbestimmte Richtungen umzulenken.

Bevorzugt besteht das lichtformende Element aus mehreren lichtformenden Unterelementen.

Bevorzugt umfasst die Leuchtvorrichtung ferner eine zweite Lichtquelle, welche zu der Bereitstellung des zweiten Lichtbildes beiträgt. Durch eine solche zweite Lichtquelle können schwankende Helligkeiten bei der Darstellung des zweiten Lichtbildes einfach ausgeglichen werden. Somit können sowohl Kosten eingespart als auch der im Kraftfahrzeug für den Verbau der Leuchtvorrichtung benötigte Bauraum verringert werden.

Bevorzugt handelt es sich bei der zweiten Lichtquelle um eine dimmbare und/oder schaltbare Lichtquelle. Mit einer derartigen Lichtquelle ist ein Ausgleich von Helligkeitsschwankungen bei der Darstellung des ersten beziehungsweise zweiten Lichtbildes besonders effizient und energiesparend möglich.

Vorzugsweise umfasst das Demodulationselement mindestens einen Mikrospiegel und/oder mindestens eine holografische Folie. Mikrospiegel stehen beispielsweise zu einer großen Vielzahl auf einem Mikrospiegelaktor zur Verfügung. Sie ermöglichen genau wie holografische Folien eine einfache Demodulation des auf das lichtformende Element umgelenkten Lichtes.

Bevorzugt umfasst das Demodulationselement mindestens eine Mikrolinse und/oder mindestens ein diffus abstrahlendes Medium. Ferner bevorzugt ist das mindestens eine diffus abstrahlende Medium als Lichtleiter ausgeführt. Mikrolinsen sowie diffus abstrahlende Medien können sowohl in ihrer Funktion als auch in ihrer geometrischen Form passgenau auf spezifische Anwendungen zugeschnitten werden.

Vorzugsweise umfasst das Demodulationselement mindestens zwei unabhängig voneinander elektronisch ansteuerbare, in ihrer Raumausrichtung per Ansteuerung ausrichtbare Lichtumlenkelemente, welche jeweils als Mikrospiegel und/oder als Lichtleiter und/oder als holografische Folie und/oder als Mikrolinse und/oder als diffus abstrahlendes Medium ausgeführt sind. Bevorzugt sind die Lichtumlenkelemente als optische Schalter ausgeführt. Ferner bevorzugt sind die Lichtumlenkelemente als Flüssigkristallfolien ausgeführt, welche dazu ausgebildet sind, bei dem Anlegen einer Spannung Licht unterschiedlicher Polarisation in verschiedene, durch die angelegte Spannung vorbestimmte Richtungen umzulenken. Besonders bevorzugt ist das Demodulationselement als DMD, als Digital Micromirror Device, also als Mikrospiegelaktor ausgeführt.

Vorzugsweise umfasst die Leuchtvorrichtung eine weitere Projektionsoptik oder eine weitere Projektionslinse, mit welcher die für die Bereitstellung des ersten Lichtbildes umgelenkten Lichtbündel in ihrem Strahlengang durch die Form der Projektionslinse vorbestimmt abgelenkt werden.

Bevorzugt sind die Lichtumlenkelemente der Lichtumlenkeinheit in einer Ebene angeordnet, in welcher ebenfalls der geometrische Mittelpunkt der der weiteren Projektionsoptik beziehungsweise der der weiteren Projektionslinse zugewandten Seite der Lichtumlenkeinheit liegt, der gegenüber einem gedachten Schnittpunkt der optischen Achse der weiteren Projektionsoptik beziehungsweise der weiteren Projektionslinse mit der Ebene versetzt ist. Bevorzugt handelt es sich bei der optischen Achse der weiteren Projektionsoptik beziehungsweise der weiteren Projektionslinse um eine gedachte, durch die Krümmungsmittelpunkte der weiteren Projektionsoptik beziehungsweise der weiteren Projektionslinse verlaufende Gerade. Bevorzugt steht die optische Achse bei einer planen Linsenfläche der weiteren Projektionsoptik beziehungsweise der weiteren Projektionslinse senkrecht und mittig auf der planen Linsenfläche. Mit anderen Worten ausgedrückt, weist die Lichtumlenkeinheit beziehungsweise die der weiteren Projektionsoptik beziehungsweise der weiteren Projektionslinse zugewandte Fläche beziehungsweise Außenseite der Lichtumlenkeinheit bevorzugt einen geometrischen Mittelpunkt auf, welcher nicht auf der optischen Achse der weiteren Projektionsoptik beziehungsweise der weiteren Projektionslinse liegt. Ferner bevorzugt weist die Lichtumlenkeinheit einen rechteckigen Aufbau beziehungsweise einen rechteckigen Umfang auf, in welchem die einzelnen Lichtumlenkelemente zu einer Matrix organisiert sind, wobei der geometrische Mittelpunkt der Vorderseite der Lichtumlenkeinheit nicht auf der optischen Achse der weiteren Projektionsoptik beziehungsweise der weiteren Projektionslinse liegt. Bevorzugt ist die Lichtumlenkeinheit gegenüber einer mittigen Positionierung derselben vor beziehungsweise hinter der weiteren Projektionsoptik beziehungsweise der weiteren Projektionslinse versetzt. Ferner bevorzugt ist die Auslegung der weiteren Projektionsoptik beziehungsweise der weiteren Projektionslinse hinsichtlich ihrer Verzeichnung und/oder ihrer Schärfentiefe und/oder der Größe des mit ihr abbildbaren Bildkreises auf die versetzte Anordnung der weiteren Projektionsoptik beziehungsweise der weiteren Projektionslinse abgestimmt. Der Effekt einer solchen versetzten Anordnung der Lichtumlenkeinheit hinter beziehungsweise vor der weiteren Projektionsoptik beziehungsweise der weiteren Projektionslinse ist eine Entzerrung des Bildes, welche die durch die schräge Lage der Projektionsebene entstehende Verzerrung ausgleicht. Dadurch kann die Projektion des ersten Lichtbildes auf die Straße optimiert erfolgen. Ist die erfindungsgemäße Leuchtvorrichtung in einem Kraftfahrzeug verbaut, ergibt sich die schräge Lage der Projektionsebene aus dem Umstand, dass die Leuchtvorrichtung Licht in einer Richtung entlang ihrer optischen Achse zu emittieren vermag, welche bei einem horizontalen Straßenverlauf mit selbigem einen spitzen Winkel einschließt.

In einer bevorzugten Ausführungsform sind die Lichtumlenkelemente der Lichtumlenkeinheit in einer Ebene angeordnet, welche senkrecht zu der optischen Achse der weiteren Projektionsoptik beziehungsweise der weiteren Projektionslinse ausgerichtet ist. Mit anderen Worten ausgedrückt liegen die Lichtumlenkelemente der Lichtumlenkeinheit bei einer zueinander parallelen Ausrichtung in einer gemeinsamen Ebene, welche senkrecht zu der optischen Achse der weiteren Projektionsoptik beziehungsweise der weiteren Projektionslinse ausgerichtet ist. Weist die weitere Projektionsoptik oder die weitere Projektionslinse plane Linsenflächen auf, so verläuft die Ebene bevorzugt parallel zu der planen Linsenfläche der weiteren Projektionsoptik beziehungsweise der weiteren Projektionslinse. In einer derartigen Ausführungsform kann eine Projektion des ersten Lichtbildes auf besonders einfache Art und Weise erfolgen.

Vorzugsweise sind die Lichtumlenkelemente der Lichtumlenkeinheit in einer Ebene angeordnet, welche gegenüber der optischen Achse der weiteren Projektionsoptik beziehungsweise der weiteren Projektionslinse geneigt ist. Mit anderen Worten ausgedrückt sind die Lichtumlenkelemente der Lichtumlenkeinheit in einer Ebene angeordnet, welche mit der optischen Achse der weiteren Projektionsoptik beziehungsweise der weiteren Projektionslinse einen Winkel einschließt, welcher von einem rechten Winkel abweicht. Bevorzugt ist die Ebene in einem im Kraftfahrzeug verbauten Zustand der Leuchtvorrichtung in Richtung der Straße geneigt, schließt also die Ebene, in welcher die Lichtumlenkelemente der Lichtumlenkeinheit angeordnet sind, mit der optischen Achse der weiteren Projektionsoptik beziehungsweise der weiteren Projektionslinse einen Winkel ein, welcher zwischen 0° und 90° liegt. In einer derartigen, sogenannten "Tilt"-Anordnung der Lichtumlenkeinheit wird deren Schärfeebene beziehungsweise Projektionsebene in die Ebene der Straße geneigt. Durch eine auf diese Neigung abgestimmte beziehungsweise entsprechende Auslegung der Schärfentiefe der weiteren Projektionsoptik beziehungsweise der weiteren Projektionslinse kann die Projektion von zum Beispiel Symbolen auf die Straße somit verbessert erfolgen.

Des Weiteren bevorzugt ist die Ebene in einem im Kraftfahrzeug verbauten Zustand der Leuchtvorrichtung in eine von der Straße abgewandte Richtung geneigt, schließt also die Ebene, in welcher die Lichtumlenkelemente der Lichtumlenkeinheit angeordnet sind, mit der optischen Achse der weiteren Projektionsoptik beziehungsweise der weiteren Projektionslinse einen Winkel ein, welcher zwischen 90° und 180° liegt. In einer derartigen, ebenfalls als "Tilt"-Anordnung bezeichneten Anordnung der Lichtumlenkeinheit wird die Schärfeebene beziehungsweise Projektionsebene senkrecht zur Straße ausgerichtet. Eine solche Ausrichtung ist beispielsweise optimal für blendfreies Fernlicht oder für die Maskierung von Verkehrsschildern, also für eine Kontrastanpassung bei mittleren und großen Entfernungen im Fernlichtbereich.

Bevorzugt kann die Ausrichtung und/oder die Anordnung der Lichtumlenkeinheit zu der optischen Achse der der weiteren Projektionsoptik beziehungsweise der weiteren Projektionslinse innerhalb der Leuchtvorrichtung variiert werden. Bei einer derartigen Ausführung ist es möglich, die Schärfeebene beziehungsweise Projektionsebene der Leuchtvorrichtung frei zu variieren. Bevorzugt weist die Leuchtvorrichtung zu diesem Zweck mindestens ein Stellelement auf. In einer derartigen Ausführung dient die weitere Projektionsoptik beziehungsweise die weitere Projektionslinse der Darstellung des ersten Lichtbildes.

Bevorzugt ist die Lichtquelle als Halbleiterlichtquelle ausgeführt. Ferner bevorzugt ist die Lichtquelle als Laserlichtquelle, besonders bevorzugt als sogenannte weiße Laserlichtquelle ausgeführt. Des Weiteren bevorzugt ist die Halbleiterlichtquelle als Leuchtdiode, also als LED ausgeführt. Solche Halbleiterlichtquellen weisen eine hohe Effizienz und sehr geringe Schaltzeiten auf. Mit einer derartigen Lichtquelle kann die gesamte Leuchtvorrichtung digital ausgeführt, also digital ansteuerbar ausgeführt werden. Ferner sind solche Halbleiterlichtquellen digital und sehr schnell schaltbar.

In einer ferner bevorzugten Ausführungsform ist die Lichtquelle als Projektionslicht, also als Projektionslichtquelle ausgeführt. Ferner bevorzugt ist die Lichtquelle als Xenon-Lichtquelle oder als Halogen-Lichtquelle ausgeführt. In einer derartigen Ausführungsform kann von der Lichtquelle der Leuchtvorrichtung ein sehr helles Licht emittiert werden. Solche Lichtquellentypen sind kostengünstig erhältlich und weisen einen sehr hohen Lichtstrom auf.

In einer bevorzugten Ausführungsform handelt es sich bei der Lichtquelle um eine Lichtquelle eines ersten Lichtquellentyps, wobei die Lichtquellen dieses ersten Lichtquellentyps dimmbar sind und Schaltzeiten aufweisen, welche im Mikrosekundenbereich liegen. Bevorzugt handelt es sich bei der Lichtquelle des ersten Lichtquellentyps um eine oder mehrere LEDs, also um eine oder mehrere Leuchtdioden, um eine oder mehrere OLEDs, also um eine oder mehrere organische Leuchtdioden oder um eine Laserlichtquelle.

In einer ferner bevorzugten Ausführungsform handelt es sich bei der Lichtquelle um eine Lichtquelle eines zweiten Lichtquellentyps, wobei die Lichtquellen dieses zweiten Lichtquellentyps ebenfalls dimmbar sind. Bevorzugt handelt es sich bei der Lichtquelle des zweiten Lichtquellentyps um eine Halogenleuchte oder um eine Xenonleuchte.

In einer bevorzugten Ausführungsform wird im Betrieb der zweiten Lichtquelle dass von der zweiten Lichtquelle abgestrahlte Licht zumindest teilweise unmittelbar in das lichtformende Element eingestrahlt. Mit anderen Worten ausgedrückt wird im Betrieb der zweiten Lichtquelle dass von der zweiten Lichtquelle abgestrahlte Licht zumindest teilweise direkt in das lichtformende Element eingestrahlt. Es kann somit ein einfacher Ausgleich der Helligkeitsverschiebung zwischen dem ersten und dem zweiten Lichtbild durch eine zweite, dimmbare Lichtquelle realisiert werden. In einer solchen Ausführung muss die Leuchtvorrichtung nicht mit einem Zeitscheibenkonzept, also mit einem den Helligkeitsausgleich herbeiführenden Ansteuerungsalgorithmus betrieben werden. Ferner kann als Lichtquelle auch eine einfachere Lichtquelle zum Einsatz kommen. Bevorzugt handelt es sich bei der Lichtquelle um eine Xenon-Leuchte oder um eine sonstige Gasentladungs-Leuchte. Bevorzugt wird die Helligkeit der zweiten Lichtquelle entsprechend der Helligkeit des inversen Bildes gedimmt. Mit anderen Worten ausgedrückt erfolgt eine Dimmung der zweiten Lichtquelle bevorzugt stets entsprechend der Helligkeit beziehungsweise entsprechend des Helligkeitsanteils des Inversen des mittels der Leuchtvorrichtung dargestellten Bildes. Mit anderen Worten ausgedrückt erfolgt eine Regelung der Dimmung der zweiten Lichtquelle entsprechend der Helligkeit beziehungsweise entsprechend des Helligkeitsanteils des Inversen Bildes des mittels der Leuchtvorrichtung darstellbaren Bildes.

Bevorzugt ist neben der zweiten Lichtquelle auch die Lichtquelle dimmbar.

Vorzugsweise wird im Betrieb der zweiten Lichtquelle dass von der zweiten Lichtquelle abgestrahlte Licht zumindest teilweise unmittelbar in die Projektionsoptik beziehungsweise in die Projektionslinse eingestrahlt. Mit anderen Worten ausgedrückt wird vorzugsweise im Betrieb der zweiten Lichtquelle dass von der zweiten Lichtquelle abgestrahlte Licht zumindest teilweise direkt in die Projektionsoptik eingestrahlt. Eine derartige Ausführung bietet sich an, wenn mittels der zweiten Lichtquelle sowie der Kombination aus der Lichtquelle und dem lichtformenden Element jeweils das zweite Lichtbild im Wesentlichen deckungsgleich übereinanderliegend bereitstellbar ist. Bei einer derartigen Ausführung kommt kostensparend lediglich eine Projektionsoptik beziehungsweise eine Projektionslinse und eine erste weitere Projektionsoptik zum Einsatz. Die zweite Lichtquelle und die Kombination aus der Lichtquelle und dem lichtformenden Element können in einer derartigen Ausführung besonders gut als Dual-Fokus-System ausgelegt werden. Bei einem Dual-Fokus-System handelt es sich um ein System, welches aus zwei Lichtquellen eine nahezu deckungsgleiche Lichtverteilung erzeugt. Ferner können unter Nutzung der Lichtquelle als auch der zweiten Lichtquelle auch zwei verschiedene Lichtverteilungen innerhalb des zweiten Lichtbildes erzeugt werden. Beispielsweise ist es möglich, ein Tagfahrlicht als auch ein Standlicht mittels der Lichtquelle und der zweiten Lichtquelle innerhalb eines zweiten Lichtbildes, also aus der gleichen Projektionsoptik, aber jeweils mit unterschiedlichen Lichtverteilungen und Helligkeiten zu erzeugen.

Besonders bevorzugt kommt bei einer derartigen Ausführung innerhalb der Leuchtvorrichtungen ein Multi-Fokus-Spiegel zum Einsatz.

In einer bevorzugten Ausführungsform ist mittels der zweiten Lichtquelle sowie der Kombination aus der Lichtquelle und dem lichtformenden Element jeweils das zweite Lichtbild im Wesentlichen deckungsgleich übereinanderliegend bereitstellbar. Bei einer derartigen Ausführung ist das zweite Lichtbild besonders zuverlässig bereitstellbar.

Bevorzugt umfasst die Leuchtvorrichtung ferner eine zweite weitere Projektionsoptik, in welche dass von der zweiten Lichtquelle im Betrieb der zweiten Lichtquelle abgestrahlte Licht zumindest teilweise unmittelbar eingestrahlt wird. In einer solchen Ausführung kann ein Übersprechen von Licht der zweiten Lichtquelle in das mittels der Lichtquelle bereitstellbare erste Lichtbild nahezu ausgeschlossen werden.

Vorzugsweise umfasst die Leuchtvorrichtung ferner eine Steuereinheit, welche die zweite Lichtquelle und die Lichtumlenkeinheit synchron ansteuert. In einer derartigen Ausführung können die Helligkeitsschwankungen des zweiten Lichtbildes vollständig unterbunden werden. Bevorzugt ist die Steuereinheit zu einer framegenauen Synchronisation des Betriebes der zweiten Lichtquelle mit der Ansteuerung beziehungsweise Ausrichtung der Lichtumlenkelemente der Lichtumlenkeinheit ausgebildet.

Ferner bevorzugt weist die Leuchtvorrichtung neben der Lichtquelle und der zweiten Lichtquelle noch weitere Lichtquellen auf, welche zur Bereitstellung des zweiten Lichtbildes beitragen.

Bevorzugt ist sowohl die Lichtquelle als auch die zweite Lichtquelle zur Emission farbigen Lichtes ausgebildet. Mit anderen Worten ausgedrückt handelt es sich bei der Lichtquelle beziehungsweise bei der zweiten Lichtquelle jeweils bevorzugt um eine farbige Lichtquelle, also um eine Lichtquelle, welche zur Emission eingefärbten Lichtes in der Lage ist. Ferner bevorzugt ist die Lichtquelle und/oder die zweite Lichtquelle zur Emission von Licht mit einem durch einen Nutzer mittelbar oder unmittelbar voreinstellbaren Wellenlängenspektrum in der Lage.

Ferner wird ein Verfahren zur Steuerung einer erfindungsgemäßen Leuchtvorrichtung bereitgestellt. Das Verfahren umfasst die folgenden Verfahrensschritte: Bereitstellen des ersten Lichtbildes während eines ersten Zeitintervalls $t_1$. Verwenden des nicht für die Bereitstellung des ersten Lichtbildes benötigten Lichtes der Lichtquelle für die Bereitstellung des zweiten Lichtbildes während des ersten Zeitintervalls $t_1$. Beendigung der Bereitstellung des ersten Lichtbildes. Bereitstellen des zweiten Lichtbildes während eines zweiten Zeitintervalls $t_2$ mit dem gesamten Licht der Lichtquelle. Beginnen einer weiteren Iteration des Verfahrens mit dem Schritt des Bereitstellens des ersten Lichtbildes. In einer bevorzugten Ausführungsform des Verfahrens wird im Schritt des Bereitstellens des zweiten Lichtbildes ausschließlich das zweite Lichtbild bereitgestellt. Mit einem derartigen Verfahren kann die Effizienz der Leuchtvorrichtung weiter erhöht werden, indem unterhalb der Wahrnehmungsschwelle eines Betrachters zwischen der Bereitstellung sowohl des ersten und zweiten Lichtbildes in sehr kurzen Abständen hin und her gewechselt wird. Somit müssen nicht beide Lichtbilder permanent generiert werden. Ferner muss die Bereitstellung des zweiten Lichtbildes im Falle der Bereitstellung eines die Lichtquelle stark beanspruchenden ersten Lichtbildes nicht durch beispielsweise ein Ergänzungslicht unterstützt werden.

In einer bevorzugten Weiterentwicklung des Verfahrens umfasst der Schritt des Bereitstellens des zweiten Lichtbildes ferner das Abschalten der Lichtquelle bis zum Ablauf des zweiten Zeitintervalls $t_2$, wobei die Abschaltung der Lichtquelle erfolgt, sobald das zweite Lichtbild eine vorbestimmte Helligkeit aufweist. Eine solche Ausführung des Verfahrens führt abermals zu einer Erhöhung der Effizienz beziehungsweise des Wirkungsgrades der Leuchtvorrichtung, da nachdem das zweite Lichtbild hinsichtlich Intensität und Lichtverteilung vollständig aufgebaut ist beziehungsweise eine vorbestimmte Helligkeit aufweist, die Lichtquelle für einen vorbestimmten Zeitraum ganz abgeschaltet werden kann, wodurch abermals Energie eingespart werden kann. Besonders gut lässt sich ein solches Verfahren ausführen, wenn die Lichtquelle der Leuchtvorrichtung als eine Halbleiterlichtquelle ausgeführt ist.

Bevorzugt sind die Dauern des ersten und zweiten Zeitintervalls $t_1$ und $t_2$ iterationsübergreifend konstant und jeweils im Verhältnis der für die Bereitstellung des ersten und zweiten Lichtbildes benötigten Lichtströme gewählt und erfüllen die Dauern des ersten und zweiten Zeitintervalls $t_1$ und $t_2$ in jeder Iteration die Bedingung $t_1 + t_2 \leq t_g$, wobei $t_g$ der Dauer jeweils einer Iteration des Verfahrens entspricht. Bevorzugt sind alle Iterationen des Verfahrens gleich lang gewählt beziehungsweise weisen alle Iterationen des Verfahrens die gleiche Dauer $t_g$ auf. Ferner bevorzugt sind die für die Bereitstellung des ersten und zweiten Lichtbildes benötigten Lichtströme vorbestimmt oder vorbestimmbar. In einer solchen Ausführungsform kann über eine geeignete Wahl von $t_g$ ein Flackern des Lichtes der Leuchtvorrichtung beziehungsweise des ersten und zweiten Lichtbildes bei gleichzeitiger Gewährleistung des korrekten Aufbaus von erstem und zweitem Lichtbild verhindert werden. Bevorzugt sind die Dauern des ersten und zweiten Zeitintervalls $t_1$ und $t_2$ iterationsübergreifend konstant und jeweils im Verhältnis der für die Bereitstellung des ersten und zweiten Lichtbildes benötigten Lichtströme gewählt und erfüllen die Dauern des ersten und zweiten Zeitintervalls $t_1$ und $t_2$ in jeder Iteration die Bedingung $t_1 + t_2 = t_g$, wobei $t_g$ der Dauer jeweils einer Iteration des Verfahrens entspricht.

Bevorzugt sind die Dauern der Iterationen des Verfahrens iterationsübergreifend identisch und ist die Dauer $t_g$ einer Iteration des Verfahrens aus einem Intervall I gewählt, wobei I = [2ms; 7ms] ist. Besonders bevorzugt weisen alle Iterationen des Verfahrens eine Dauer von $t_g$ = 5 ms auf. Bei einer derartigen Wahl von $t_g$ kann sichergestellt werden, dass ein Betrachter der von der Leuchtvorrichtung bereitgestellten Lichtbilder eine zwischenzeitliche Abschaltung der Leuchtvorrichtung nicht wahrnimmt.

Vorzugsweise sind die Dauern des ersten und zweiten Zeitintervalls $t_1$ und $t_2$ von Iteration zu Iteration variabel, wobei das erste Zeitintervall $t_1$ einer Iteration endet, sobald das erste Lichtbild vollständig aufgebaut ist und/oder wobei das zweite Zeitintervall $t_2$ dieser Iteration endet, sobald das Verhältnis aus den Helligkeiten des ersten und zweiten, in der Iteration erzeugten Lichtbildes einen vorbestimmten Wert erreicht und wobei die Dauern des ersten und zweiten Zeitintervalls $t_1$ und $t_2$ in jeder Iteration die Bedingung $t_1 + t_2 \leq t_g$ erfüllen, wobei $t_g$ der Dauer jeweils einer Iteration des Verfahrens entspricht. Bei einer derartigen Ausführungsform des Verfahrens ändert sich also von Iteration zu Iteration des Verfahrens das Verhältnis der Dauern des ersten und zweiten Zeitintervalls $t_1$ und $t_2$ zueinander proportional zu dem von dem ersten Lichtbild während einer Iteration aufgewiesenen Schwarzanteil. Bei einer derartigen Ausführungsform des Verfahrens ist es vorteilhaft, wenn die Lichtquelle der Leuchtvorrichtung als dimmbares Projektionslicht, also als dimmbare Projektionslichtquelle ausgeführt ist. Bevorzugt ist im Rahmen des Verfahrens das erste Lichtbild vollständig aufgebaut, wenn es eine vorbestimmte Helligkeit aufweist.

In einer bevorzugten Ausführungsform umfasst das Verfahren ferner den Schritt des Dimmens der Lichtquelle während des zweiten Zeitintervalls $t_2$, wobei der Betrag, um welchen das Licht der Lichtquelle gedimmt wird, von dem Verhältnis der Dauer des ersten Zeitintervalls $t_1$ zu der Dauer des zweiten Zeitintervalls $t_2$ abhängig ist. In einer derartigen Ausführungsform des Verfahrens hängt der Betrag, um welchen das Licht der Lichtquelle während des zweiten Zeitintervalls $t_2$ einer Iteration des Verfahrens gedimmt wird, von dem von dem ersten Lichtbild der jeweiligen Iteration des Verfahrens aufgewiesenen Schwarzanteil ab. Damit kann verhindert werden, dass die Helligkeit der gesamten Lichtverteilung der Leuchtvorrichtung, also der Gesamtlichtverteilung der Leuchtvorrichtung, über die Iterationen des Verfahrens hinweg schwankt.

Des Weiteren bevorzugt umfasst das Verfahren ferner den Schritt des Bereitstellens von n weiteren Lichtbildern während n weiterer Zeitintervalle, wobei die weiteren Lichtbilder jeweils ebenfalls eine gleichbleibende oder veränderliche Lichtverteilung aufweisen und wobei $n \in \mathbb{N}$ ist. In einer derartigen Ausführungsform können weitere statische oder veränderliche, also variable Lichtbilder während weiterer Zeitintervalle kaskadiert hintereinander von der Leuchtvorrichtung bereitgestellt werden. Es kann dann von einer erfindungsgemäßen Leuchtvorrichtung nicht nur ein permanentes, statisches Lichtbild bereitgestellt werden, sondern mehrere, beispielsweise ein linkes und ein rechtes statisches Lichtbild oder aber auch mehrere variable Lichtbilder innerhalb eines oder mehrerer statischer Lichtbilder bereitgestellt werden.

In einer bevorzugten Ausführungsform wird in einem ersten Zeitintervall $t_1$ das erste sowie das zweite Lichtbild in veränderlichen Anteilen mittels eines ersten Lichtstroms und mittels eines zweiten Lichtstroms bereitgestellt, wobei die Intensitäten des ersten und des zweiten Lichtstroms beziehungsweise deren Veränderung abhängig von dem mittels der Leuchtvorrichtung dargestellten beziehungsweise darzustellenden Lichtmuster sind. In einer bevorzugten Weiterentwicklung dieser Ausführungsform des Verfahrens wird während eines zweiten Zeitintervalls $t_2$ ausschließlich das zweite Lichtbild dargestellt, während die Darstellung des ersten Lichtbildes abgeschlossen ist. In einer des Weiteren bevorzugten Weiterentwicklung dieser Ausführungsform des Verfahrens ist die Lichtquelle in einem dritten Zeitintervall $t_3$ abgeschaltet, so dass weder das erste noch das zweite Lichtbild von der Leuchtvorrichtung dargestellt wird.

In einer ferner bevorzugten ersten Ausführungsvariante des Verfahrens gilt für das erste und zweite Zeitintervall $t_1$ und $t_2$ die Bedingung $t_1 + t_2 = t_g$, wobei $t_g$ der Dauer einer Iteration des Verfahrens entspricht und wobei $t_1$, $t_2$ und $t_g$ variabel sind. In einer bevorzugten Weiterentwicklung dieser ersten Ausführungsvariante werden über das Verhältnis von dem ersten Zeitintervall $t_1$ zu dem zweiten Zeitintervall $t_2$ die Helligkeiten des ersten und zweiten Lichtbildes im Verhältnis zueinander gesteuert. Bevorzugt wird dabei die Dauer von dem zweiten Zeitintervall $t_2$ in Abhängigkeit von dem mittels der Leuchtvorrichtung dargestellten beziehungsweise darzustellenden Lichtmuster angepasst. Da sich in einer solchen ersten bevorzugten Ausführungsvariante über das erste und zweite Zeitintervall $t_1$ und $t_2$ lediglich das Verhältnis der Helligkeiten anpassen lässt, erfolgt bevorzugt eine Anpassung der Gesamthelligkeit an einen vorbestimmten Wert durch ein Dimmen der Lichtquelle. Bevorzugt wird für die Ausführung einer solchen ersten Ausführungsvariante eine Lichtquelle des ersten oder eine Lichtquelle des zweiten Lichtquellentyps verwandt. In einer ferner bevorzugten Ausführungsvariante des Verfahrens gilt für das erste und zweite Zeitintervall $t_1$ und $t_2$ die Bedingung $t_1 + t_2 \leq t_g$, wobei $t_g$ der Dauer einer Iteration des Verfahrens entspricht und wobei $t_1$, $t_2$ und $t_g$

variabel sind. Der Vorteil der Ausführung dieser ersten Ausführungsvariante liegt in einem Effizienz-Gewinn auf Grund des verringerten Stromverbrauchs der gedimmten Lichtquelle. In einer derartigen, ersten Ausführungsvariante wird das von der Leuchtvorrichtung bereitstellbare Lichtbild beziehungsweise Lichtmuster nicht mit einer konstanten Framerate dargestellt.

In einer ferner bevorzugten zweiten Ausführungsvariante des Verfahrens gilt für das erste, zweite und dritte Zeitintervall $t_1$, $t_2$ und $t_3$ die Bedingung $t_1 + t_2 + t3 = t_g$, wobei $t_g$ der Dauer einer Iteration des Verfahrens entspricht und konstant ist, während $t_1$, $t_2$ und $t_3$ variabel sind. In einer bevorzugten Weiterentwicklung dieser zweiten Ausführungsvariante werden über das Verhältnis von dem ersten Zeitintervall $t_1$ zu dem zweiten Zeitintervall $t_2$ die Helligkeiten des ersten und zweiten Lichtbildes im Verhältnis zueinander gesteuert. In einer ferner bevorzugten Weiterentwicklung dieser zweiten Ausführungsvariante leuchtet die Lichtquelle während des ersten und zweiten Zeitintervalls $t_1$ und $t_2$ mit voller Helligkeit. Des Weiteren bevorzugt wird die Lichtquelle in der zweiten Ausführungsvariante während des dritten Zeitintervalls $t_3$ ausgeschaltet. Ferner bevorzugt erfolgt in der zweiten Ausführungsvariante des Verfahrens über die Wahl der Dauer des dritten Zeitintervalls $t_3$ die Einstellung einer konstanten Dauer $t_g$ unabhängig von dem mittels der Leuchtvorrichtung dargestellten beziehungsweise darzustellenden Lichtbild beziehungsweise Lichtmuster. Bevorzugt wird für die Ausführung einer solchen zweiten Ausführungsvariante eine Lichtquelle des ersten Lichtquellentyps verwandt. Bevorzugt ist die verwandte Lichtquelle des ersten Lichtquellentyps dazu ausgebildet, eine Abschaltung des von ihr emittierten Lichtes innerhalb von Mikrosekunden und/oder noch schneller zu realisieren. Bei der Ausführung einer solchen zweiten Ausführungsvariante ergibt sich ein Effizienz-Gewinn aus der zeitweisen Abschaltung der Lichtquelle.

Bevorzugt werden im Rahmen des Verfahrens Lichtbilder mit verschiedenen Lichtfarben dargestellt, wobei das Verfahren für jede Lichtfarbe einmal ausgeführt wird. Beispielsweise kann das Verfahren zwei-, drei oder n-mal hintereinander ausgeführt werden, wobei die Lichtfarbe bei jeder Ausführung des Verfahrens eine andere ist.

Bevorzugt wird zur Darstellung farbiger Symbole mittels der Leuchtvorrichtung das Verfahren, insbesondere das Verfahren in der ersten Ausführungsvariante oder in der zweiten Ausführungsvariante für jede der Einzelfarben durchgeführt und ausgeglichen.

Ferner bevorzugt ist das Verfahren in der ersten Ausführungsvariante mit dem Verfahren in der zweiten Ausführungsvariante kombinierbar und/oder ist das Ablaufschema des Verfahrens durch mehrfachen Wechsel zwischen den Lichtmustern beziehungsweise zwischen den mittels des Verfahrens in der ersten und der zweiten Ausführungsvariante dargestellten beziehungsweise darstellbaren Lichtbildern mit unterschiedlichen Zeitintervallen oder Darstellungsabfolgen erweiterbar.

Durch die vorgestellten Schaltverfahren können schwankende Helligkeiten bei der Darstellung des zweiten Lichtbildes einfach ausgeglichen werden. Somit können sowohl Kosten eingespart als auch der im Kraftfahrzeug für den Verbau der Leuchtvorrichtung benötigte Bauraum verringert werden.

Ferner wird ein Kraftfahrzeug zur Verfügung gestellt, welches eine erfindungsgemäße Leuchtvorrichtung aufweist. Bevorzugt ist die erfindungsgemäße Leuchtvorrichtung in mindestens einem der Frontscheinwerfer des Kraftfahrzeuges verbaut. Ferner bevorzugt ist die erfindungsgemäße Leuchtvorrichtung in einem der Rückscheinwerfer des Kraftfahrzeuges verbaut. In einem derart ausgeführten Kraftfahrzeug kommen die zuvor im Zusammenhang mit der Leuchtvorrichtung und dem Verfahren genannten Vorteile innerhalb eines Kraftfahrzeuges zum Tragen.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in einem Ausführungsbeispiel anhand der zugehörigen Zeichnung erläutert. Es zeigt:

Figur 1    ein erstes Ausführungsbeispiel einer erfindungsgemäßen Leuchtvorrichtung.

Figur 2    ein zweites Ausführungsbeispiel einer erfindungsgemäßen Leuchtvorrichtung;

Figur 3    ein drittes Ausführungsbeispiel einer erfindungsgemäßen Leuchtvorrichtung;

Figur 4    ein viertes Ausführungsbeispiel einer erfindungsgemäßen Leuchtvorrichtung;

Figur 5    verschiedene schematische Darstellungen unterschiedlicher Anordnungen von Lichtumlenkeinheiten in Ausführungsbeispielen erfindungsgemäßer Leuchtvorrichtungen;

Figur 6    schematische Darstellungen unterschiedlicher Anordnungen von Lichtumlenkeinheiten verschiedener Ausführungsbeispiele erfindungsgemäßer Leuchtvorrichtungen;

Figur 7    ein erstes Ausführungsbeispiel eines erfindungsgemäßen Kraftfahrzeugs, und

Figur 8    ein zweites Ausführungsbeispiel eines erfindungsgemäßen Kraftfahrzeugs.

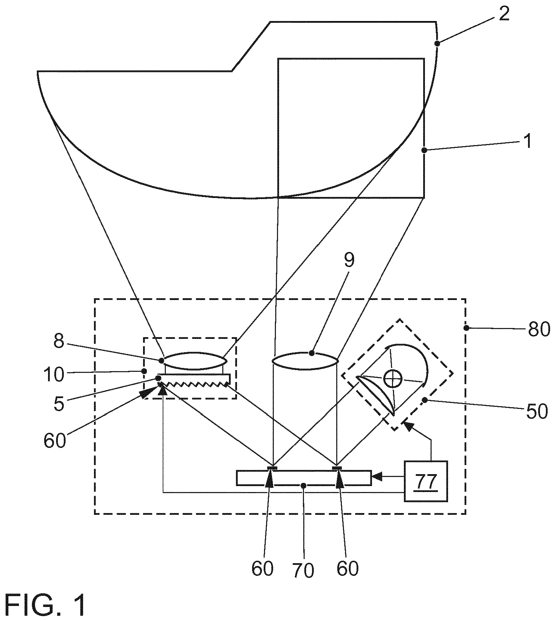

Figur 1 zeigt ein Ausführungsbeispiel einer erfindungsgemäßen Leuchtvorrichtung 80 für ein Kraftfahrzeug, welche in Figur 1 schematisch im Betrieb dargestellt ist. Die erfindungsgemäße Leuchtvorrichtung 80 umfasst eine Lichtumlenkeinheit 70, welche in diesem Ausführungsbeispiel eine große Vielzahl an unabhängig voneinander elektronisch ansteuerbaren, in ihrer Raumausrichtung per Ansteuerung unabhängig voneinander ausrichtbare Lichtumlenkelemente 60 aufweist. Die Lichtumlenkeinheit 70 ist in diesem Ausführungsbeispiel rein beispielhaft als Mikrospiegelaktor 70 ausgeführt, während die Lichtumlenkelemente 60 rein beispielhaft dementsprechend als mechanische bewegliche Mikrospiegel 60 ausgeführt sind, deren Raumausrichtung sich per elektronischer Ansteuerung verändern beziehungsweise einstellen lässt. Die Lichtumlenkelemente 60 sind in einer ersten Ansteuerposition dazu ausgebildet, auf sie treffendes Licht in einer durch ihre Raumausrichtung vorbestimmten Richtung umzulenken, wodurch ein erstes, veränderliches Lichtbild 1 mit einer variablen und einstellbaren Lichtverteilung bereitstellbar ist. Bei diesem ersten Lichtbild 1 handelt es sich in diesem Ausführungsbeispiel rein beispielhaft um ein bewegtes Bild voreingestellten Inhaltes. In diesem Ausführungsbeispiel wird der Anschaulichkeit halber ein sich in seiner Größe kontinuierlich veränderndes Rechteck auf eine Richtungsfahrbahn projiziert. Bei dem mittels einer erfindungsgemäßen Leuchtvorrichtung 80 generierbaren und projizierbaren ersten Lichtbild 1 kann es sich aber um ein beliebiges bewegtes Bild handeln. Mittels der erfindungsgemäßen Leuchtvorrichtung 80 können gar ganze Filmsequenzen auf eine Abbildungsfläche projiziert werden. Des Weiteren umfasst die erfindungsgemäße Leuchtvorrichtung 80 eine Lichtquelle 50, mittels welcher Licht in die Lichtumlenkeinheit 70 einstrahlbar ist. In diesem Ausführungsbeispiel ist die Lichtquelle 50 rein beispielhaft als Halbleiterlichtquelle 50 ausgeführt. Es können allerdings auch erfindungsgemäße Leuchtvorrichtungen 80 ausgeführt sein, bei welchen die Lichtquelle 50 anders ausgeführt ist, beispielsweise als Projektionslicht beziehungsweise als Projektionslampe. Die Leuchtvorrichtung 80 weist ferner ein lichtformendes Element 10 auf, welches in diesem Ausführungsbeispiel rein beispielhaft als Projektionslinse 8 mit einem vorgeschalteten Demodulationselement 5 ausgeführt ist. Die Lichtumlenkelemente 60 der Lichtumlenkeinheit 70 sind jeweils einzeln in einer zweiten Ansteuerposition dazu ausgebildet, Licht in das lichtformende Elemente 10 umzulenken, wobei das lichtformende Element 10 dazu ausgebildet ist, in selbiges eingestrahltes Licht als ein zweites Lichtbild 2 mit stets gleichbleibender Lichtverteilung bereitzustellen. Von der Lichtquelle 50 in die Lichtumlenkeinheit 70 eingestrahltes Licht wird dabei zu jedem Zeitpunkt vollständig für die Bereitstellung des ersten und/oder zweiten Lichtbildes 1, 2 genutzt. Dementsprechend weist die erfindungsgemäße Leuchtvorrichtung 80 keinen Beam-Stopp, also keinen Auffangblock auf.

In diesem Ausführungsbeispiel umfasst der Mikrospiegelaktor 70 eine große Vielzahl an Mikrospiegeln 60, welche in einer Matrixstruktur angeordnet sind. Jeweils ein Mikrospiegel 60 bildet jeweils ein Pixel des zu projizierenden ersten Lichtbildes 1 ab, indem er dass in den jeweiligen Mikrospiegel 60 einfallende Licht als Teil des ersten Lichtbildes 1 aus der Leuchtvorrichtung 80 heraus reflektiert. Diese Mikrospiegel 60, also die Lichtumlenkelemente 60 der Lichtumlenkeinheit 70, können in diesem Ausführungsbeispiel jeweils einzeln per elektronischer Ansteuerung von der ersten Ansteuerposition in eine zweite Ansteuerposition verfahren werden. In dieser Position lenken sie das Licht der Lichtquelle 50 in das lichtformende Element 10 um, anstatt es als Teil des ersten Lichtbildes 1 aus der Leuchtvorrichtung 80 direkt herauszureflektieren. Diejenigen Pixel des Mikrospiegelaktors 70, also diejenigen Mikrospiegel 60 des Mikrospiegelaktors 70, welche nicht zur Bereitstellung des ersten Lichtbildes 1 benötigt werden, werden in diesem Ausführungsbeispiel in die zweite Ansteuerposition verfahren, wodurch dass von der Lichtquelle 50 in sie eingestrahlte Licht auf das lichtformende Element 10 umgelenkt wird.

Wird Licht von den Mikrospiegeln 60, also den Lichtumlenkelementen 60 in das lichtformende Element 10, also in die Projektionslinse 8 mit dem vorgeschalteten Demodulationselement 5 eingestrahlt, wird dieses von dem lichtformenden Element 10, als zweites Lichtbild 2 mit stets gleicher, also konstanter Lichtverteilung bereitgestellt. Dazu wird das von den Lichtumlenkelementen 60 in das lichtformende Element 10 umgelenkte Licht von dem Demodulationselement 5 demoduliert. Die Demodulation des Lichtes ermöglicht die konstante Lichtverteilung des zweiten Lichtbildes 2 unabhängig davon, von welcher Position aus das Licht von dem Mikrospiegelaktor 70 in das lichtformende Element 10 hineinreflektiert wird. In diesem Ausführungsbeispiel handelt es sich bei dem zweiten Lichtbild 2 um eine Abblendlichtverteilung für Rechtsverkehr. Es können jedoch auch beliebig andere Lichtfunktionen und Lichtbilder mittels erfindungsgemäßer Leuchtvorrichtungen 80 realisiert werden. In diesem Ausführungsbeispiel umfasst das Demodulationselement 5 rein beispielhaft ebenfalls eine Vielzahl an Mikrospiegeln 60, mittels welchen die Demodulation des einfallenden Lichtes realisiert wird. Es können allerdings auch erfindungsgemäße Leuchtvorrichtungen 80 mit lichtformenden Elementen 10 realisiert werden, bei welchen die Demodulation auf andere Art und Weise erfolgt, beispielsweise mittels einer Großen Vielzahl an Mikrolinsen, mittels holografischer Folien, mittels einer oder mehrerer diffus streuender Optiken, mittels Lichtleitelementen oder mittels beliebiger sonstiger optischer Elemente. In diesem Ausführungsbeispiel umfasst die Leuchtvorrichtung 80 eine weitere Projektionslinse 9, welche das von der Lichtumlenkeinheit 70 zur Projektion des ersten Lichtbildes 1 bereit gestellte Licht vor dem Austritt aus der Leuchtvorrichtung 80 rein beispielhaft auffächert.

Das in Figur 1 dargestellte Ausführungsbeispiel einer erfindungsgemäßen Leuchtvorrichtung 80 wird mittels dem folgend beschriebenen, erfindungsgemäßen Verfahren gesteuert. Die Ausführung des Verfahrens kann beispielsweise elektronisch durch ein Steuerungssystem oder eine Prozessoreinheit erfolgen. Zunächst wird während eines ersten Zeitintervalls $t_1$ das erste Lichtbild 1 bereitgestellt. Während innerhalb des ersten Zeitintervalls $t_1$ das erste Lichtbild 1 bereitgestellt wird, wird das nicht zur Projektion des ersten Lichtbildes 1 verwandte Licht von den Lichtumlenkelementen 60 auf das lichtformende Element 10 umgeleitet und so zeitgleich das zweite, in seiner Lichtverteilung statische Lichtbild 2 von der Leuchtvorrichtung 80 bereitgestellt. Nach Ablauf des ersten Zeitintervalls $t_1$ wird die Bereitstellung des ersten Lichtbildes 1 beendet, also das erste Lichtbild 1 abgeschaltet und gemäß des erfindungsgemäßen Verfahrens das zweite Lichtbild 2 während eines zweiten Zeitintervalls $t_2$ bereitgestellt. In diesem Ausführungsbeispiel wird rein beispielhaft ausschließlich das zweite Lichtbild 2 während des zweiten Zeitintervalls $t_2$ bereitgestellt. Nach Ablauf des zweiten Zeitintervalls $t_2$ beginnt eine weitere Iteration des Verfahrens mit dem Schritt des Bereitstellens des ersten Lichtbildes 1.

Rein beispielhaft umfasst der Schritt des Bereitstellens des zweiten Lichtbildes 2 in diesem Ausführungsbeispiel ferner das Abschalten der Lichtquelle 50 bis zum Ablauf des zweiten Zeitintervalls $t_2$, wobei die Abschaltung der Lichtquelle 50 erfolgt, sobald das zweite Lichtbild 2 eine vorbestimmte Helligkeit aufweist. Mit anderen Worten ausgedrückt wird in diesem Ausführungsbeispiel rein beispielhaft die Lichtquelle 50 innerhalb des zweiten Zeitintervalls $t_2$ einer Iteration abgeschaltet, sobald das zweite Lichtbild 2 eine vorbestimmte Helligkeit aufweist, welche beispielsweise gemessen und mit einem Referenzwert verglichen werden kann. Mit erneutem Beginn des ersten Zeitintervalls $t_1$ der nächsten Iteration wird die Lichtquelle 50 dann wieder in Betrieb genommen. Die Dauern des ersten und zweiten Zeitintervalls $t_1$ und $t_2$ sind in diesem Ausführungsbeispiel rein beispielhaft iterationsübergreifend konstant und jeweils im Verhältnis der für die Bereitstellung des ersten und zweiten Lichtbildes 1, 2 benötigten Lichtströme gewählt. Sie erfüllen ferner in jeder Iteration die Bedingung $t_1 + t_2 \leq t_g$, wobei $t_g$ der Dauer jeweils einer Iteration des Verfahrens entspricht. $t_g$ ist in diesem Ausführungsbeispiel rein beispielhaft mit $t_g = 5$ ms gewählt. $t_g$ kann aber auch größer oder kleiner als dieser Wert gewählt sein. Beispielsweise können die Dauern der Iterationen auch mit $t_g = 2$ ms, $t_g = 3$ ms, $t_g = 4$ ms, $t_g = 6$ ms oder mit $t_g = 7$ ms oder anders gewählt sein.

In anderen Ausführungsformen erfindungsgemäßer Verfahren können die Dauern des ersten und zweiten Zeitintervalls $t_1$ und $t_2$ von Iteration zu Iteration auch variabel sein, sich also von Iteration zu Iteration ändern. In solchen Ausführungsformen endet das erste Zeitintervall $t_1$ einer Iteration, sobald das erste Lichtbild 1 vollständig aufgebaut ist. Das zweite Zeitintervall $t_2$ einer jeweiligen Iteration endet, sobald das Verhältnis aus den Helligkeiten des ersten und zweiten, in der jeweiligen Iteration erzeugten Lichtbildes 1, 2 einen vorbestimmten Wert erreicht, wobei die Dauern des ersten und zweiten Zeitintervalls $t_1$ und $t_2$ in jeder Iteration ebenfalls die Bedingung $t_1 + t_2 \leq t_g$ erfüllen, wobei $t_g$ abermals der Dauer jeweils einer Iteration des Verfahrens entspricht und wie oben beschrieben gewählt sein kann. Weist das erste Lichtbild 1 einer m-ten Iteration des Verfahrens einen geringeren Schwarzanteil auf als das erste Lichtbild 1 einer m+1-ten Iteration, verändert sich dementsprechend auch das Verhältnis aus den Dauern $t_1 + t_2$ dieser Iterationen. In einer solchen Ausführungsform des Verfahrens kann selbiges ferner den Schritt des Dimmens der Lichtquelle 50 während des zweiten Zeitintervalls $t_2$ umfassen, wobei der Betrag, um welchen das Licht der Lichtquelle 50 gedimmt wird, von dem Verhältnis der Dauer des ersten Zeitintervalls $t_1$ zu der Dauer des zweiten Zeitintervalls $t_2$ abhängig ist. Das heißt, auch der Betrag, um welchen die Lichtquelle 50 während einer Iteration gedimmt wird, ist von dem Schwarzanteil des ersten Lichtbildes 1 dieser Iteration abhängig und kann sich von Iteration zu Iteration unterscheiden.

Es können ferner auch erfindungsgemäße Verfahren ausgeführt werden, welche ferner den Schritt des Bereitstellens von n weiteren Lichtbildern während n weiterer Zeitintervalle umfasst, wobei die n weiteren Lichtbilder jeweils ebenfalls eine gleichbleibende oder veränderliche Lichtverteilung aufweisen und wobei $n \in \mathbb{N}$ ist. Somit können nahezu beliebig viele verschiedene statische und dynamische Lichtbilder 1, 2,..., n von einer erfindungsgemäßen Leuchtvorrichtung 80 bereitgestellt werden. Ferner können diese Lichtbilder jeweils voneinander verschiedene Lichtfarben beziehungsweise voneinander verschiedene Lichtspektren aufweisen.

In diesem Ausführungsbeispiel weist die erfindungsgemäße Leuchtvorrichtung 80 rein beispielhaft ferner eine Steuereinheit 77 auf, welche mit der Lichtquelle 50, der Lichtumlenkeinheit 70 sowie dem Demodulationselement 5 elektrisch leitfähig verbunden ist. Die Steuereinheit 77 vermag die Lichtquelle 50, die Lichtumlenkelemente 60 der Lichtumlenkeinheit 70 sowie die Mikrospiegel 60 des Demodulationselementes 5 zur Ausführung der erfindungsgemäßen Verfahren anzusteuern. Somit kann über die Steuereinheit 77 die Ausrichtung der Lichtumlenkelemente 60 der Lichtumlenkeinheit 70 beziehungsweise des Demodulationselementes 5 als auch die Helligkeit beziehungsweise die Dimmung der Lichtquelle 50 gesteuert werden.

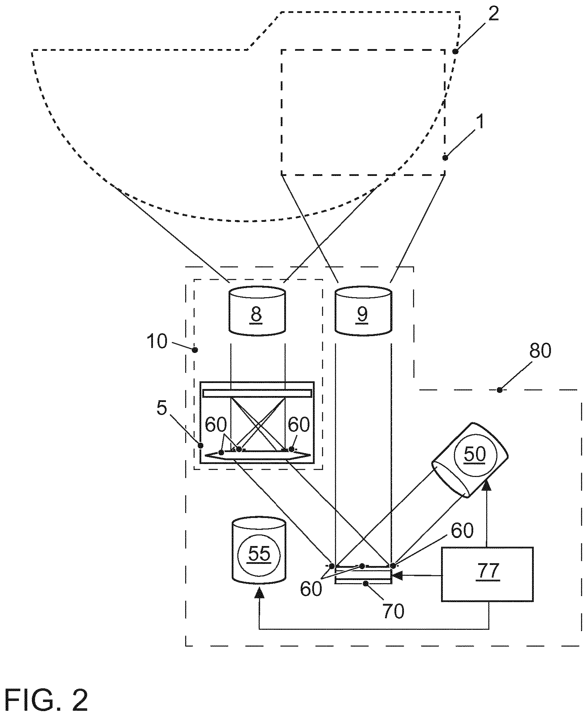

Figur 2 zeigt ein zweites Ausführungsbeispiel einer erfindungsgemäßen Leuchtvorrichtung 80 für ein Kraftfahrzeug, welche in Figur 2 schematisch im Betrieb dargestellt ist. Die erfindungsgemäße Leuchtvorrichtung 80 umfasst eine Lichtumlenkeinheit 70, welche in diesem ersten Ausführungsbeispiel eine große Vielzahl an unabhängig voneinander elektronisch ansteuerbaren, in ihrer Raumausrichtung per Ansteuerung unabhängig voneinander ausrichtbare Lichtumlenkelemente 60 aufweist. Die Lichtumlenkeinheit 70 ist in diesem zweiten Ausführungsbeispiel rein beispielhaft als Mikrospiegelaktor 70 ausgeführt, während die Lichtumlenkelemente 60 rein beispielhaft dementsprechend als mechanische bewegliche Mikrospiegel 60 ausgeführt sind, deren Raumausrichtung sich per elektronischer Ansteuerung verändern beziehungsweise einstellen lässt. Die Lichtumlenkelemente 60 sind in einer ersten Ansteuerposition beziehungsweise in einer ersten Ansteuerabfolge beziehungsweise in einer ersten Ansteuerung dazu ausgebildet, auf sie treffendes Licht in einer durch ihre Raumausrichtung vorbestimmte Richtung umzulenken, wodurch ein erstes, veränderliches Lichtbild 1 mit einer variablen und einstellbaren Lichtverteilung bereitstellbar ist. Bei diesem ersten Lichtbild 1 handelt es sich in diesem zweiten Ausführungsbeispiel rein beispielhaft um ein bewegtes Bild voreingestellten Inhaltes. In diesem zweiten Ausführungsbeispiel wird der Anschaulichkeit halber ein sich in seiner Größe kontinuierlich veränderndes Rechteck auf eine Richtungsfahrbahn projiziert. Bei dem mittels einer erfindungsgemäßen Leuchtvorrichtung 80 generierbaren und projizierbaren ersten Lichtbild 1 kann es sich aber um ein beliebiges bewegtes Bild handeln. Mittels der erfindungsgemäßen Leuchtvorrichtung 80 können gar ganze Filmsequenzen auf eine Abbildungsfläche beziehungsweise Projektionsebene projiziert werden. Des Weiteren umfasst die erfindungsgemäße Leuchtvorrichtung 80 eine Lichtquelle 50, mittels welcher Licht in die Lichtumlenkeinheit 70 einstrahlbar ist. In diesem zweiten Ausführungsbeispiel ist die Lichtquelle 50 rein beispielhaft als Halbleiterlichtquelle 50 ausgeführt. Es können allerdings auch erfindungsgemäße Leuchtvorrichtungen 80 ausgeführt sein, bei welchen die Lichtquelle 50 anders ausgeführt ist, beispielsweise als Projektionslicht beziehungsweise als Projektionslampe. Die Leuchtvorrichtung 80 weist ferner ein lichtformendes Element 10 auf, welches in diesem zweiten Ausführungsbeispiel rein beispielhaft als Projektionsoptik beziehungsweise Projektionslinse 8 mit einem vorgeschalteten Demodulationselement 5 ausgeführt ist. Die Lichtumlenkelemente 60 der Lichtumlenkeinheit 70 sind jeweils einzeln in einer zweiten Ansteuerposition beziehungsweise in einer zweiten Ansteuerabfolge beziehungsweise in einer zweiten Ansteuerung dazu ausgebildet, Licht in das lichtformende Elemente 10 umzulenken, wobei das lichtformende Element 10 dazu ausgebildet ist, in selbiges eingestrahltes Licht als ein zweites Lichtbild 2 mit stets gleichbleibender Lichtverteilung bereitzustellen. In diesem zweiten Ausführungsbeispiel umfasst der Mikrospiegelaktor 70 eine große Vielzahl an Mikrospiegeln 60, welche in einer Matrixstruktur angeordnet sind. Jeweils ein Mikrospiegel 60 bildet jeweils ein Pixel des zu projizierenden ersten Lichtbildes 1 ab, indem er dass in den jeweiligen Mikrospiegel 60 einfallende Licht als Teil des ersten Lichtbildes 1 aus der Leuchtvorrichtung 80 heraus reflektiert. Diese Mikrospiegel 60, also die Lichtumlenkelemente 60 der Lichtumlenkeinheit 70, können in diesem zweiten Ausführungsbeispiel jeweils einzeln per elektronischer Ansteuerung von der ersten Ansteuerposition in eine zweite Ansteuerposition verfahren werden. In dieser Position lenken sie das Licht der ersten Lichtquelle 50 in das lichtformende Element 10 um, anstatt es als Teil des ersten Lichtbildes 1 aus der Leuchtvorrichtung 80 direkt heraus zu reflektieren. Diejenigen Pixel des Mikrospiegelaktors 70, also diejenigen Mikrospiegel 60 des Mikrospiegelaktors 70, welche nicht zur Bereitstellung des ersten Lichtbildes 1 benötigt werden, werden in diesem zweiten Ausführungsbeispiel in die zweite Ansteuerposition verfahren, wodurch dass von der Lichtquelle 50 in sie eingestrahlte Licht auf das lichtformende Element 10 umgelenkt wird. In diesem zweiten Ausführungsbeispiel ist die Projektionsoptik rein beispielhaft eine Projektionslinse 8. Es können allerdings auch erfindungsgemäße Leuchtvorrichtungen 80 ausgeführt werden, bei welchen die Projektionsoptik 8 anders, beispielsweise als mindestens einen Reflektor umfassendes optisches System ausgeführt ist.

Wird Licht von den Mikrospiegeln 60, also den Lichtumlenkelementen 60 in das lichtformende Element 10, also in die Projektionsoptik beziehungsweise die Projektionslinse 8 mit dem vorgeschalteten Demodulationselement 5 eingestrahlt, wird dieses von dem lichtformenden Element 10 als zweites Lichtbild 2 mit stets gleicher, also konstanter Lichtverteilung bereitgestellt. Dazu wird das von den Lichtumlenkelementen 60 in das lichtformende Element 10 umgelenkte Licht von dem Demodulationselement 5 demoduliert. Die Demodulation des Lichtes ermöglicht die konstante Lichtverteilung des zweiten Lichtbildes 2 unabhängig davon, von welcher Position aus das Licht von dem Mikrospiegelaktor 70 in das lichtformende Element 10 hineinreflektiert wird. In diesem zweiten Ausführungsbeispiel handelt es sich bei dem zweiten Lichtbild 2 um eine Abblendlichtverteilung für Rechtsverkehr. Es können jedoch auch beliebig andere Lichtfunktionen und Lichtbilder mittels erfindungsgemäßer Leuchtvorrichtungen 80 realisiert werden. In diesem zweiten Ausführungsbeispiel umfasst das Demodulationselement 5 rein beispielhaft ebenfalls eine Vielzahl an Lichtumlenkelementen 60, mittels welchen die Demodulation des einfallenden Lichtes realisiert wird und welche in diesem zweiten Ausführungsbeispiel rein beispielhaft als Mikrolinsen ausgeführt sind. Es können allerdings auch erfindungsgemäße Leuchtvorrichtungen 80 mit lichtformenden Elementen 10 realisiert werden, bei welchen die Demodulation auf andere Art und Weise erfolgt, beispielsweise mittels einer Großen Vielzahl an Mikrospiegeln, mittels holografischer Folien, mittels einer oder mehrerer diffus streuender Optiken, mittels Lichtleitelementen oder mittels beliebiger sonstiger optischer Elemente. In diesem zweiten Ausführungsbeispiel umfasst die Leuchtvorrichtung 80 eine weitere Projektionsoptik 9, welche das von der Lichtumlenkeinheit 70 zur Projektion des ersten Lichtbildes 1 bereitgestellte Licht vor dem Austritt aus der Leuchtvorrichtung 80 rein beispielhaft auffächert.

In diesem zweiten Ausführungsbeispiel umfasst die Leuchtvorrichtung 80 ferner eine zweite Lichtquelle 55, welche zu der Bereitstellung des zweiten Lichtbildes 2 beiträgt. Zu diesem Zweck ist die zweite Lichtquelle 55 in diesem zweiten Ausführungsbeispiel rein beispielhaft räumlich vor dem lichtformenden Element 10 angeordnet. Im Betrieb der zweiten Lichtquelle 55 strahlt selbige einen wesentlichen Teil des von ihr emittierten Lichtes unmittelbar, also direkt in das lichtformende Element 10 ein. Es können allerdings auch erfindungsgemäße Leuchtvorrichtungen 80 realisiert werden, bei welchen die zweite Lichtquelle 55 das gesamte von ihrem emittierten Licht unmittelbar, also direkt in das lichtformende Element 10 einstrahlt. Die zweite Lichtquelle 55 ist in diesem zweiten Ausführungsbeispiel rein beispielhaft dimmbar und schaltbar ausgeführt.

Sowohl die erste und die zweite Lichtquelle 50, 55 als auch die Lichtumlenkeinheit 70, also in diesem zweiten Ausführungsbeispiel der Mikrospiegelaktor 70, sind in diesem zweiten Ausführungsbeispiel rein beispielhaft elektrisch leitfähig mit einer Steuereinheit 77 verbunden, welche die erste und die zweite Lichtquelle 50, 55 und die Lichtumlenkeinheit 70 synchron anzusteuern vermag. In diesem zweiten Ausführungsbeispiel steuert die Steuereinheit 77 insbesondere die zweite Lichtquelle 55 beziehungsweise deren Lichtemission entsprechend des Helligkeitsmangels des zweiten Lichtbildes 2 an. Genauer ausgedrückt steuert die Steuereinheit 77 die Dimmung der zweiten Lichtquelle 55 stets entsprechend der Helligkeit beziehungsweise entsprechend des Helligkeitsanteils des Inversen des ersten Lichtbildes 1. Auf diese Weise wird die zweite Lichtquelle 2 stets auf den jeweils benötigten Helligkeitswert heruntergedimmt. Es können ferner auch Ausführungsbeispiele erfindungsgemäßer Leuchtvorrichtungen 80 realisiert werden, bei welchen das verwandte Demodulationselement 5 aktiv steuerbare beziehungsweise ansteuerbare Elemente, wie beispielsweise in ihrer Position beziehungsweise Ausrichtung veränderliche Mikrospiegel 60 umfasst, welche ebenfalls von der Steuereinheit 77 ansteuerbar sind.

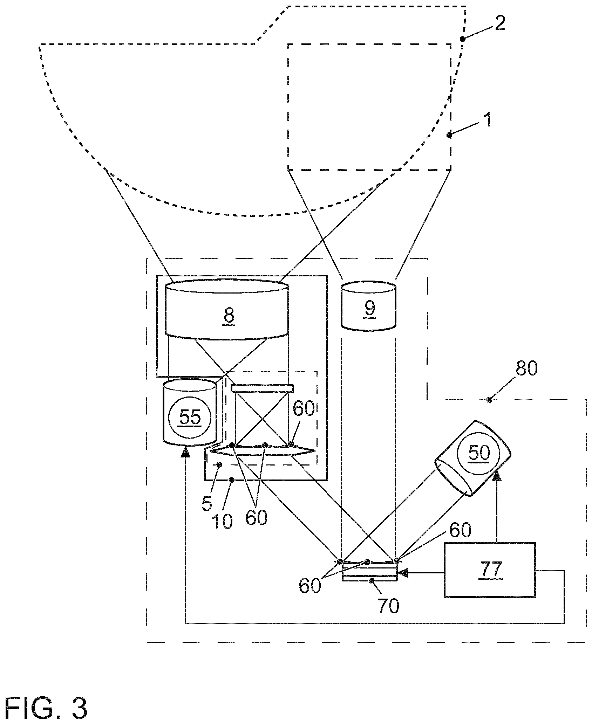

Figur 3 zeigt ein drittes Ausführungsbeispiel einer erfindungsgemäßen Leuchtvorrichtung 80. Bei diesem dritten Ausführungsbeispiel einer erfindungsgemäßen Leuchtvorrichtung 80 handelt es sich im Wesentlichen um das in Figur 2 gezeigte und oben beschriebene zweite Ausführungsbeispiel einer erfindungsgemäßen Leuchtvorrichtung 80. Die in Figur 3 gleich bezeichneten Komponenten entsprechen jenen des in Figur 2 gezeigten zweiten Ausführungsbeispiels, so dass das zu diesem Beschriebenen auch für die gleich bezeichneten Komponenten in Figur 3 Gültigkeit besitzt. Im Unterschied zu dem zweiten Ausführungsbeispiel ist in dem dritten Ausführungsbeispiel der erfindungsgemäßen Leuchtvorrichtung 80 die zweite Lichtquelle 55 räumlich neben dem lichtformenden Element 10 angeordnet. In diesem dritten Ausführungsbeispiel wird im Betrieb der zweiten Lichtquelle 55 dass von derselben abgestrahlte Licht im Wesentlichen unmittelbar, also direkt in die Projektionsoptik 8 eingestrahlt. Es können allerdings auch erfindungsgemäße Leuchtvorrichtungen 80 ausgeführt werden, bei welchen im Betrieb der zweiten Lichtquelle 55 dass gesamte von demselben abgestrahlten Licht unmittelbar, also direkt in die Projektionsoptik 8 eingestrahlt wird.

In diesem dritten Ausführungsbeispiel einer erfindungsgemäßen Leuchtvorrichtung 80 ist mittels der zweiten Lichtquelle 55 sowie der Kombination aus der Lichtquelle 50, der zweiten

Lichtquelle 55 und dem lichtformenden Element 10 jeweils das zweite Lichtbild 2 im Wesentlichen deckungsgleich übereinanderliegend bereitstellbar. Mit anderen Worten ausgedrückt ist das zweite Lichtbild 2 in diesem dritten Ausführungsbeispiel sowohl mittels der zweiten Lichtquelle 55 als auch mittels der Kombination aus der Lichtquelle 50 und dem lichtformenden Element 10 abbildbar, wobei die derart darstellbaren zweiten Lichtbilder 2 im Wesentlichen kongruent sind. Die zweite Lichtquelle 55 und die Kombination aus der Lichtquelle 50 und dem lichtformenden Element 10 sind in diesem dritten Ausführungsbeispiel rein beispielhaft als ein sogenanntes Dual-Fokus-System ausgelegt, bilden also ein System, welches aus der Lichtquelle 50 und der zweiten Lichtquelle 55 eine nahezu deckungsgleiche Lichtverteilung, das zweite Lichtbild 2, zu erzeugen vermag.

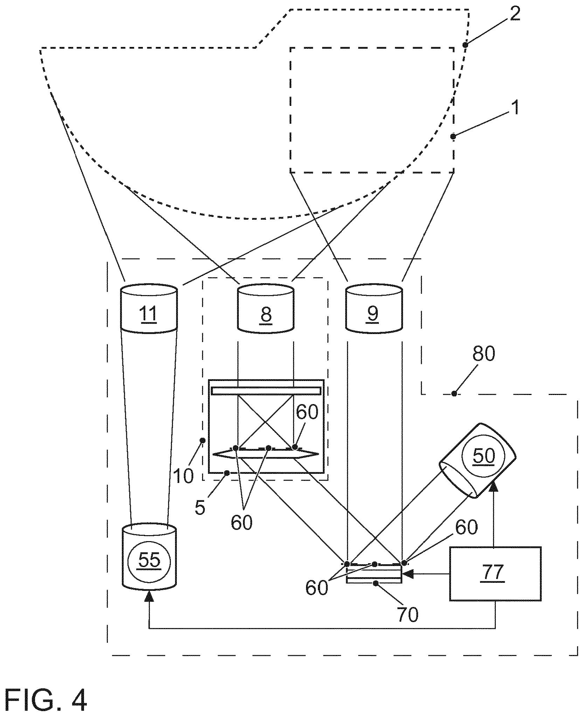

Figur 4 zeigt ein viertes Ausführungsbeispiel einer erfindungsgemäßen Leuchtvorrichtung 80. Bei diesem vierten Ausführungsbeispiel einer erfindungsgemäßen Leuchtvorrichtung 80 handelt es sich im Wesentlichen um das in Figur 2 und 3 gezeigte und oben beschriebene zweite beziehungsweise dritte Ausführungsbeispiel einer erfindungsgemäßen Leuchtvorrichtung 80. Die in Figur 4 gleich bezeichneten Komponenten entsprechen jenen der in Figur 2 und 3 gezeigten Ausführungsbeispielen, so dass das zu diesem Beschriebenen auch für die gleich bezeichneten Komponenten in Figur 4 Gültigkeit besitzt. Im Unterschied zu den in den Figuren 2 und 3 gezeigten Ausführungsbeispielen umfasst das vierte Ausführungsbeispiel einer erfindungsgemäßen Leuchtvorrichtung 80 eine zweite weitere Projektionsoptik 11, in welche ein wesentlicher Teil des von der zweiten Lichtquelle 55 im Betrieb der zweiten Lichtquelle 55 abgestrahlten Lichtes unmittelbar, also direkt eingestrahlt wird. Es können ferner auch erfindungsgemäße Leuchtvorrichtungen 80 ausgeführt werden, welche eine zweite weitere Projektionsoptik 11 umfassen und in welche das gesamte, von der zweiten Lichtquelle 55 im Betrieb der zweiten Lichtquelle 55 abgestrahlte Licht unmittelbar, also direkt eingestrahlt wird.

Mit anderen Worten ausgedrückt ist in diesem vierten Ausführungsbeispiel eine eigene zweite weitere Projektionsoptik 11 für die zweite Lichtquelle 55 vorgesehen, welche räumlich von der Projektionsoptik 8 getrennt ist und in welche die zweite Lichtquelle 55 im Betrieb ihr Licht separat einstrahlt. Bei der zweiten Lichtquelle 55 handelt es sich in diesem vierten Ausführungsbeispiel rein beispielhaft um eine farbige Lichtquelle 55, also um eine Lichtquelle 55, welche zur Emission eingefärbten Lichtes in der Lage ist. In diesem vierten Ausführungsbeispiel ist die Lichtfarbe der zweiten Lichtquelle 55 rein beispielhaft blau, es können aber auch zweite Lichtquellen 55 ausgeführt werden, welche zur Abstrahlung von Licht mit einer beliebigen anderen Lichtfarbe ausgebildet sind.

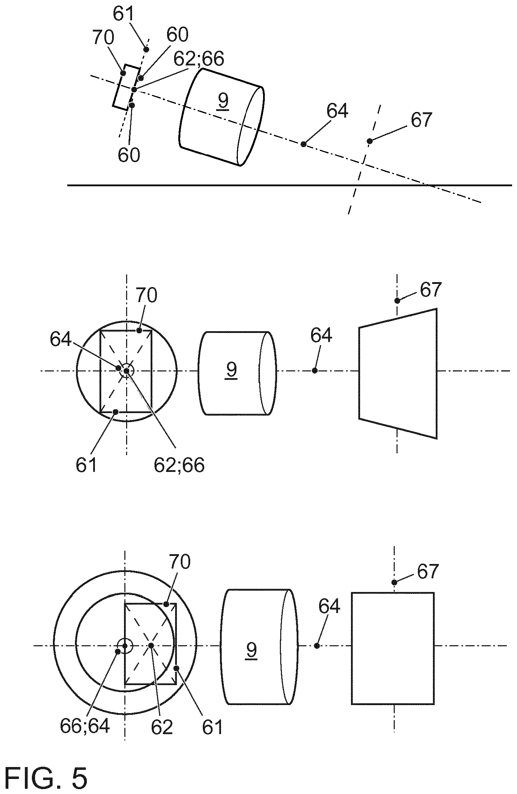

Figur 5 zeigt verschiedene schematische Darstellungen unterschiedlicher Anordnungen von Lichtumlenkeinheiten 70 in Ausführungsbeispielen erfindungsgemäßer Leuchtvorrichtungen 80. In der oberen in Figur 5 gezeigten Darstellung ist eine schematische Seitenansicht freigeschnittener Komponenten einer erfindungsgemäßen, in einem Kraftfahrzeug verbauten Leuchtvorrichtung 80 gezeigt, während die unteren beiden Darstellungen verschiedene Anordnungen von Lichtumlenkeinheiten 70 in erfindungsgemäßen Leuchtvorrichtungen 80 in einer Explosionsansicht zeigen. In der obersten Abbildung in Figur 5 ist eine rechteckig dargestellte Lichtumlenkeinheit 70 in einer Seitenansicht gezeigt. In einem in einem Kraftfahrzeug verbauten Zustand ist die Lichtumlenkeinheit 70 gegenüber dem Horizont beziehungsweise einem planen Erdboden, auf welchem das Kraftfahrzeug mit seinen Rädern steht, geneigt angeordnet. Die Lichtumlenkeinheit 70 ist der weiteren Projektionsoptik beziehungsweise der weiteren Projektionslinse 9 zugewandt, welche in diesem Ausführungsbeispiel rein beispielhaft als zylindrische Projektionslinse 9 mit planen Grundflächen ausgeführt ist. Genauer beschrieben ist die Vorderseite der Lichtumlenkeinheit 70 einer der Grundflächen der weiteren Projektionsoptik beziehungsweise der weiteren Projektionslinse 9 zugewandt, deren Ausrichtung mit der Ausrichtung der Lichtumlenkeinheit 70 übereinstimmt, welche also in einem in einem Kraftfahrzeug verbauten Zustand ebenfalls gegenüber dem Horizont beziehungsweise einem planen Erdboden, auf welchem das Kraftfahrzeug mit seinen Rädern steht, geneigt ist. Dementsprechend ist auch die Projektionsebene 67 der weiteren Projektionsoptik beziehungsweise der weiteren Projektionslinse 9 gegenüber dem Horizont beziehungsweise dem Erdboden, auf welchem das Kraftfahrzeug mit seinen Rädern steht, geneigt.

In diesem Ausführungsbeispiel sind die Lichtumlenkelemente 60 der Lichtumlenkeinheit 70, welche in diesem Ausführungsbeispiel rein beispielhaft als Mikrospiegel 60 realisiert sind, in einer Ebene 61 angeordnet, welche parallel zur Grundfläche der weiteren Projektionsoptik beziehungsweise der weiteren Projektionslinse 9 verläuft. In dieser Ebene liegt ebenfalls der geometrische Mittelpunkt 62 der der weiteren Projektionsoptik beziehungsweise der der weiteren Projektionslinse 9 zugewandten Seite der Lichtumlenkeinheit 70. Mit anderen Worten ausgedrückt befindet sich der geometrische Mittelpunkt 62 in der geometrischen Mitte der der weiteren Projektionsoptik beziehungsweise der der weiteren Projektionslinse 9 zugewandten Außenseite beziehungsweise Außenfläche der Lichtumlenkeinheit 70. In diesem Ausführungsbeispiel verläuft eine (gedachte) optische Achse 64 der weiteren Projektionsoptik beziehungsweise der weiteren Projektionslinse 9 durch die Lichtumlenkeinheit 70 hindurch und bildet mit der Lichtumlenkeinheit 70 beziehungsweise mit der Ebene 61, in welcher die Lichtumlenkelemente 60 der Lichtumlenkeinheit 70 liegen, also mit der der weiteren Projektionsoptik beziehungsweise der der weiteren Projektionslinse 9 zugewandten Außenseite der Lichtumlenkeinheit 70, einen gedachten Schnittpunkt 66. Die optische Achse 64 verläuft mittig durch die weitere Projektionsoptik beziehungsweise durch die weitere Projektionslinse 9 und steht mittig und senkrecht auf den Grundflächen derselben. In der in Figur 5 obersten Darstellung ist der geometrische Mittelpunkt 62 gegenüber dem gedachten Schnittpunkt 66 der optischen Achse 64 der weiteren Projektionsoptik beziehungsweise der weiteren Projektionslinse 9 mit der Ebene 61 nicht versetzt. Mit anderen Worten ausgedrückt ist die Lichtumlenkeinheit 70 gegenüber einer vor der weiteren Projektionsoptik beziehungsweise der weiteren Projektionslinse 9 mittigen Ausrichtung beziehungsweise Anordnung nicht verschoben, also nicht versetzt..

In der mittleren Darstellung der Figur 5 ist ein anderes Ausführungsbeispiel schematisch in einer Explosionsansicht gezeigt, bei welchem die Lichtumlenkeinheit 70 senkrecht und mittig zu der optischen Achse 64 der weiteren Projektionsoptik beziehungsweise der weiteren Projektionslinse 9 steht. In dieser Ausführung fallen der gedachte Schnittpunkt 66 der optischen Achse 64 der weiteren Projektionsoptik beziehungsweise der weiteren Projektionslinse 9 mit der Ebene 61 sowie der geometrische Mittelpunkt 62 auf der der weiteren Projektionsoptik beziehungsweise der weiteren Projektionslinse 9 zugewandten Außenseite der Lichtumlenkeinheit 70 zusammen. Dies führt zu einer trapezförmigen Verzerrung des mittels der Leuchtvorrichtung 80 in die Projektionsebene 67 projizierten Bildes.

In der untersten Darstellung der Figur 5 ist das in der obersten Darstellung der Figur 5 gezeigte Ausführungsbeispiel schematisch in einer Explosionsansicht gezeigt, bei welchem zwecks Korrektur der trapezförmigen Verzerrung die Lichtumlenkeinheit 70 senkrecht und im Gegensatz zu der obersten Darstellung der Figur 5, versetzt beziehungsweise verschoben zu der optischen Achse 64 der weiteren Projektionsoptik beziehungsweise der weiteren Projektionslinse 9 angeordnet ist. In dieser Ausführung fallen der gedachte Schnittpunkt 66 der optischen Achse 64 der weiteren Projektionsoptik beziehungsweise der weiteren Projektionslinse 9 mit der Ebene 61 sowie der geometrische Mittelpunkt 62 auf der der weiteren Projektionsoptik beziehungsweise der weiteren Projektionslinse 9 zugewandten Außenseite der Lichtumlenkeinheit 70 nicht zusammen, sondern sind gegeneinander verschoben. Somit steht die Lichtumlenkeinheit 70 senkrecht aber nicht mittig zur optischen Achse 64 der weiteren Projektionsoptik beziehungsweise der weiteren Projektionslinse 9. Durch eine auf den Versatz beziehungsweise die Verschiebung der Lichtumlenkeinheit 70 abgestimmte Auslegung der weiteren Projektionsoptik beziehungsweise der weiteren Projektionslinse 9, insbesondere hinsichtlich derer Verzeichnung, Schärfentiefe und/oder der Größe des mit ihr abbildbaren Bildkreises, wird die trapezförmige Verzerrung des in die Projektionsebene 67 projizierten Bildes ausgeglichen. Dies ist in der untersten Darstellung der Figur 5 durch ein mittels der Leuchtvorrichtung 80 in die Projektionsebene 67 abgebildetes Rechteck verdeutlicht.

Bei der mittleren und unteren Explosionsansicht in Figur 5 ist jeweils links die Ausrichtung des Abbildungskreises der weiteren Projektionsoptik 9 beziehungsweise der weiteren Projektionslinse 9 vor der Lichtumlenkeinheit 70 dargestellt. Mittig in der mittleren und unteren Explosionsansicht der Figur 5 ist jeweils die zugehörige weitere Projektionsoptik 9 beziehungsweise die weitere Projektionslinse 9 selbst in einer perspektivischen Ansicht gezeigt, welche zur Darstellung des Abbildungskreises verwandt wurde. Rechts ist das jeweils mit den zugehörigen Anordnungen bereitstellbare Lichtbild gezeigt.

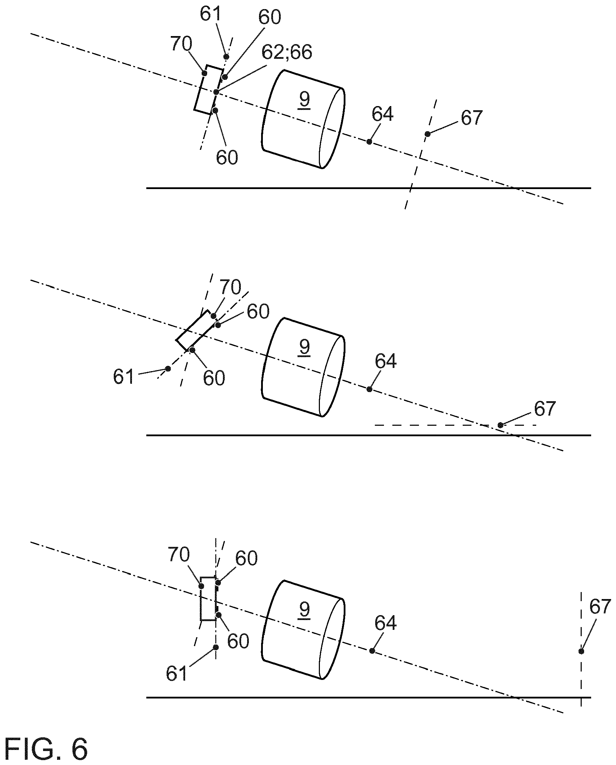

In Figur 6 sind schematische Darstellungen unterschiedlicher Anordnungen von Lichtumlenkeinheiten 70 verschiedener Ausführungsbeispiele erfindungsgemäßer Leuchtvorrichtungen 80 dargestellt. Das oberste in Figur 6 dargestellte Ausführungsbeispiel ist identisch mit dem obersten in Figur 5 dargestellten Ausführungsbeispiel und in Figur 6 lediglich zu Vergleichszwecken dargestellt. Das mittlere in Figur 6 dargestellte Ausführungsbeispiel entspricht im Wesentlichen dem obersten in Figur 6 dargestellten Ausführungsbeispiel. Die gleich bezeichneten Komponenten in der mittleren Darstellung der Figur 6 entsprechen denen der obersten Darstellung der Figur 6, so dass das bereits gesagte zu diesen Komponenten auch für die gleich bezeichneten Komponenten in der mittleren Figur 6 Geltung hat.

Im Unterschied zu der oberen Darstellung der Figur 6 ist die Lichtumlenkeinheit 70 in der mittleren Darstellung der Figur 6 gegenüber der optischen Achse 64 der weiteren Projektionsoptik beziehungsweise der weiteren Projektionslinse 9 geneigt. Mit anderen Worten ausgedrückt sind die Lichtumlenkelemente 60 der Lichtumlenkeinheit 70 in diesem Ausführungsbeispiel in einer Ebene 61 angeordnet, welche gegenüber der optischen Achse 64 der weiteren Projektionsoptik beziehungsweise der weiteren Projektionslinse 9 geneigt ist. Die Lichtumlenkelemente 60 der Lichtumlenkeinheit 70 sind also in einer Ebene 61 angeordnet, welche mit der optischen Achse 64 der weiteren Projektionsoptik beziehungsweise der weiteren Projektionslinse 9 einen Winkel einschließt, welcher von einem rechten Winkel abweicht. In diesem Ausführungsbeispiel entspricht der Winkel rein beispielhaft 75°. Abermals mit anderen Worten beschrieben ist in dem in der mittleren Darstellung der Figur 5 gezeigten Ausführungsbeispiel die Ebene 61 in einem im Kraftfahrzeug verbauten Zustand der Leuchtvorrichtung 80 in Richtung der Straße geneigt, schließt also die Ebene 61, in welcher die Lichtumlenkelemente 60 der Lichtumlenkeinheit 70 angeordnet sind, mit der optischen Achse der weiteren Projektionsoptik beziehungsweise der weiteren Projektionslinse 9 einen Winkel ein, welcher zwischen 0° und 90° liegt. In dieser sogenannten "Tilt"-Anordnung der Lichtumlenkeinheit 70 wird die Projektionsebene 67 in die Ebene der Straße geneigt. Durch eine abgestimmte beziehungsweise entsprechende Auslegung von zum Beispiel der Schärfentiefe der weiteren Projektionsoptik beziehungsweise der weiteren Projektionslinse 9 kann die Projektion von zum Beispiel Symbolen auf die Straße somit verbessert erfolgen.

Das unterste in Figur 6 dargestellte Ausführungsbeispiel entspricht im Wesentlichen dem obersten beziehungsweise dem mittleren in Figur 6 dargestellten Ausführungsbeispiel. Die gleich bezeichneten Komponenten in der untersten Darstellung der Figur 6 entsprechen denen der obersten sowie der mittleren Darstellung der Figur 6, so dass das bereits Gesagte zu diesen Komponenten auch für die gleich bezeichneten Komponenten in der untersten Darstellung der Figur 6 Geltung hat. Im Unterschied zu den anderen Ausführungsbeispielen der Figur 6 ist die Ebene 61, in welcher die Lichtumlenkelemente 60 der Lichtumlenkeinheit 70 angeordnet sind, in einem im Kraftfahrzeug verbauten Zustand der Leuchtvorrichtung 80 in eine von der Straße abgewandte Richtung geneigt, schließt also die Ebene 61, in welcher die Lichtumlenkelemente 60 der Lichtumlenkeinheit 70 angeordnet sind, mit der optischen Achse 64 der weiteren Projektionsoptik beziehungsweise der weiteren Projektionslinse 9 einen Winkel ein, welcher zwischen 90° und 180° liegt. In diesem Ausführungsbeispiel beträgt der Winkel rein beispielhaft 105°. In einer derartigen, ebenfalls als "Tilt"-Anordnung bezeichneten Anordnung der Lichtumlenkeinheit 70 wird die Projektionsebene 67 senkrecht zur Straße ausgerichtet.

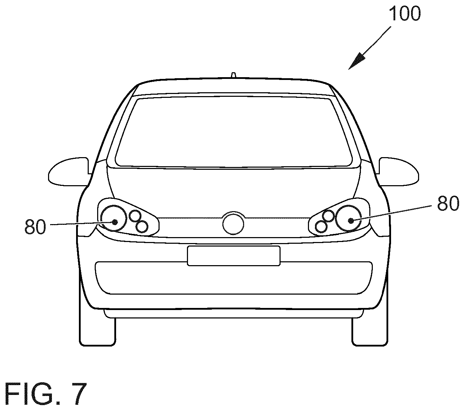

In Figur 7 ist ein erstes Ausführungsbeispiel eines erfindungsgemäßen Kraftfahrzeugs 100 dargestellt. Das Kraftfahrzeug 100 ist in einer Frontansicht dargestellt und weist rein beispielhaft zwei erfindungsgemäße Leuchtvorrichtungen 80 auf, welche in den Frontscheinwerfern des Kraftfahrzeugs 100 verbaut sind. Es können allerdings auch erfindungsgemäße Kraftfahrzeuge 100 realisiert werden, bei welchen erfindungsgemäße Leuchtvorrichtungen 80 an beliebigen sonstigen Positionen in oder am Kraftfahrzeug 100 verbaut sind. Insbesondere können auch erfindungsgemäße Kraftfahrzeuge 100 realisiert werden, bei welchen erfindungsgemäße Leuchtvorrichtungen 80 in den Rückfahrscheinwerfern des Kraftfahrzeuges 100 verbaut sind.

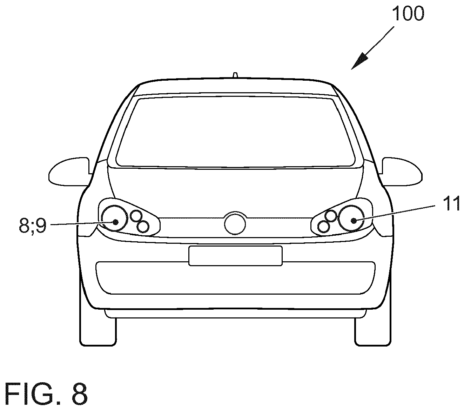

In Figur 8 ist ein zweites Ausführungsbeispiel eines erfindungsgemäßen Kraftfahrzeugs 100 dargestellt. Das Kraftfahrzeug 100 ist in einer Frontansicht gezeigt und weist rein beispielhaft das zuvor beschriebene und in Figur 4 dargestellte vierte Ausführungsbeispiel einer erfindungsgemäßen Leuchtvorrichtung 80 auf. In diesem zweiten Ausführungsbeispiel eines erfindungsgemäßen Kraftfahrzeugs 100 wird also eine einzige erfindungsgemäße Leuchtvorrichtung 80 zur Ausbildung der beiden Frontscheinwerfer des Kraftfahrzeuges 100 verwandt. Die Komponenten der in Figur 4 dargestellten Leuchtvorrichtung 80 sind dabei auf die beiden Frontscheinwerfer des Kraftfahrzeuges 100 verteilt. Konkret sind in diesem zweiten Ausführungsbeispiel eines erfindungsgemäßen Kraftfahrzeugs 100 die Projektionsoptik 8 beziehungsweise die Projektionslinse 8 sowie die weitere Projektionsoptik 9 beziehungsweise die weitere Projektionslinse 9 der erfindungsgemäßen Leuchtvorrichtung 80 im linken Frontscheinwerfer des Kraftfahrzeugs 100 angeordnet, während die zweite weitere Projektionsoptik 11 der Leuchtvorrichtung 80 im rechten Frontscheinwerfer des Kraftfahrzeuges 100 angeordnet ist.

Es können allerdings auch erfindungsgemäße Kraftfahrzeuge 100 realisiert werden, bei welchen die Komponenten auch anderer erfindungsgemäßer Leuchtvorrichtungen 80 an beliebigen sonstigen Positionen in oder am Kraftfahrzeug 100 verbaut sind. Insbesondere können auch erfindungsgemäße Kraftfahrzeuge 100 realisiert werden, bei welchen die Komponenten erfindungsgemäßer Leuchtvorrichtungen 80 in den Rückfahrscheinwerfern des Kraftfahrzeuges 100 verbaut sind. Auch können die Komponenten der in Figur 4 dargestellten und zuvor beschriebenen Leuchtvorrichtung 80 anders als in Figur 8 dargestellt in einem erfindungsgemäßen Kraftfahrzeug 100 verbaut beziehungsweise angeordnet sein.

## Bezugszeichenliste

| 1 | erstes Lichtbild |
|---|---|
| 2 | zweites Lichtbild |
| 5 | Demodulationselement |
| 8 | Projektionsoptik, Projektionslinse |
| 9 | weitere Projektionsoptik, weitere Projektionslinse |
| 10 | lichtformendes Element |
| 11 | zweite weitere Projektionsoptik |
| 50 | Lichtquelle |
| 55 | zweite Lichtquelle |
| 60 | Lichtumlenkelemente, Mikrospiegel |
| 61 | Ebene |
| 62 | geometrischer Mittelpunkt |
| 64 | optische Achse |
| 66 | gedachter Schnittpunkt |
| 67 | Projektionsebene |
| 70 | Lichtumlenkeinheit, Mikrospiegelaktor |
| 77 | Steuereinheit |
| 80 | Leuchtvorrichtung |
| 100 | Kraftfahrzeug |

## Patentansprüche

1.   Leuchtvorrichtung (80) für ein Kraftfahrzeug, umfassend,

- eine Lichtumlenkeinheit (70), welche mindestens zwei unabhängig voneinander elektronisch ansteuerbare, in ihrer Raumausrichtung per Ansteuerung ausrichtbare Lichtumlenkelemente (60) aufweist, wobei die Lichtumlenkelemente (60) in einer ersten Ansteuerposition dazu ausgebildet sind, auf sie treffendes Licht in einer durch ihre Raumausrichtung vorbestimmten Richtung umzulenken, wodurch ein erstes, veränderliches Lichtbild (1) mit einer variablen und einstellbaren Lichtverteilung bereitstellbar ist;
- eine Lichtquelle (50), mittels welcher Licht in die Lichtumlenkeinheit (70) einstrahlbar ist, wobei die Leuchtvorrichtung (80) ferner ein lichtformendes Element (10) umfasst und mindestens ein Lichtumlenkelement (60) in einer zweiten Ansteuerposition dazu ausgebildet ist, Licht in das lichtformende Elemente (10) umzulenken,

**dadurch gekennzeichnet, dass**

das lichtformende Element (10) als Projektionslinse (8) mit einem vorgeschalteten Demodulationselement (5), das mindestens zwei unabhängig voneinander elektronisch ansteuerbare, in ihrer Raumausrichtung per Ansteuerung ausrichtbare Lichtumlenkelemente umfasst, ausgeführt ist und dazu ausgebildet ist, in selbiges eingestrahltes Licht als ein zweites Lichtbild (2) mit stets gleichbleibender Lichtverteilung bereitzustellen, wobei von der Lichtquelle (50) in die Lichtumlenkeinheit (70) eingestrahltes Licht zu jedem Zeitpunkt vollständig für die Bereitstellung des ersten und/oder zweiten Lichtbildes (1, 2) genutzt wird.

2. Leuchtvorrichtung (80) nach Anspruch 1, **dadurch gekennzeichnet, dass** es sich bei dem zweiten Lichtbild (2) um eine Grundlichtverteilung oder um eine Tagfahrlichtsignatur handelt.

3. Leuchtvorrichtung (80) nach einem der vorhergehenden Ansprüche, **dadurch gekennzeichnet, dass** die Lichtumlenkeinheit (70) als Mikrospiegelaktor (70) ausgeführt ist und die Lichtumlenkelemente (60) als Mikrospiegel (60) ausgeführt sind.

4. Leuchtvorrichtung (80) nach einem der vorhergehenden Ansprüche, **dadurch gekennzeichnet, dass** von der Lichtquelle (50) generiertes Licht, welches nicht zur Bereitstellung des ersten Lichtbildes (1) genutzt wird mittels mindestens eines Lichtumlenkelementes (60) in das lichtformende Element (10) umgelenkt wird.

5. Leuchtvorrichtung (80) nach Anspruch 1, **dadurch gekennzeichnet, dass** das Demodulationselement (5) mindestens einen Mikrospiegel und/oder mindestens eine holografische Folie umfasst.

6. Leuchtvorrichtung (80) nach Anspruch 1, **dadurch gekennzeichnet, dass** das Demodulationselement (5) mindestens eine Mikrolinse und/oder mindestens ein diffus abstrahlendes Medium umfasst.

7. Leuchtvorrichtung (80) nach einem der vorhergehenden Ansprüche, **dadurch gekennzeichnet, dass** die Lichtquelle (50) als Halbleiterlichtquelle (50) ausgeführt ist.

8. Verfahren zur Steuerung einer Leuchtvorrichtung (80) nach einem der Ansprüche 1 bis 7, welches die folgenden Verfahrensschritte umfasst:

   - Bereitstellen des ersten Lichtbildes (1) während eines ersten Zeitintervalls $t_1$;
   - Verwenden des nicht für die Bereitstellung des ersten Lichtbildes (1) benötigten Lichtes der Lichtquelle (50) für die Bereitstellung des zweiten Lichtbildes (2) während des ersten Zeitintervalls $t_1$;
   - Beendigung der Bereitstellung des ersten Lichtbildes (1);
   - Bereitstellen des zweiten Lichtbildes (2) während eines zweiten Zeitintervalls $t_2$ mit dem gesamten Licht der Lichtquelle (50);
   - Beginnen einer weiteren Iteration des Verfahrens mit dem Schritt des Bereitstellens des ersten Lichtbildes (1).

9. Verfahren nach Anspruch 8, **dadurch gekennzeichnet, dass** der Schritt des Bereitstellens des zweiten Lichtbildes (2) ferner das Abschalten der Lichtquelle (50) bis zum Ablauf des zweiten Zeitintervalls $t_2$ umfasst, wobei die Abschaltung der Lichtquelle (50) erfolgt, sobald das zweite Lichtbild (2) eine vorbestimmte Helligkeit aufweist.

10. Verfahren nach Anspruch 8 oder 9, **dadurch gekennzeichnet, dass** die Dauern des ersten und zweiten Zeitintervalls $t_1$ und $t_2$ iterationsübergreifend konstant und jeweils im Verhältnis der für die Bereitstellung des ersten und zweiten Lichtbildes (1, 2) benötigten Lichtströme gewählt sind und in jeder Iteration die Bedingung $t_1 + t_2 \leq t_g$ erfüllen, wobei $t_g$ der Dauer jeweils einer Iteration des Verfahrens entspricht.

11. Verfahren nach Anspruch 10, **dadurch gekennzeichnet, dass** die Dauern der Iterationen des Verfahrens iterationsübergreifend identisch sind und die Dauer $t_g$ einer Iteration des Verfahrens aus einem Intervall I gewählt ist, wobei I = [2ms; 7ms] ist.

12. Verfahren nach Anspruch 8, **dadurch gekennzeichnet, dass** die Dauern des ersten und zweiten Zeitintervalls $t_1$ und $t_2$ von Iteration zu Iteration variabel sind, wobei das erste Zeitintervall $t_1$ einer Ite-

ration endet, sobald das erste Lichtbild (1) vollständig aufgebaut ist und/oder wobei das zweite Zeitintervall $t_2$ dieser Iteration endet, sobald das Verhältnis aus den Helligkeiten des ersten und zweiten, in der Iteration erzeugten Lichtbildes (1, 2) einen vorbestimmten Wert erreicht und wobei die Dauern des ersten und zweiten Zeitintervalls $t_1$ und $t_2$ in jeder Iteration die Bedingung $t_1 + t_2 \leq t_g$ erfüllen, wobei $t_g$ der Dauer jeweils einer Iteration des Verfahrens entspricht.

13. Verfahren nach Anspruch 12, **dadurch gekennzeichnet, dass** das Verfahren ferner den Schritt des Dimmens der Lichtquelle (50) während des zweiten Zeitintervalls $t_2$ umfasst, wobei der Betrag, um welchen das Licht der Lichtquelle (50) gedimmt wird, von dem Verhältnis der Dauer des ersten Zeitintervalls $t_1$ zu der Dauer des zweiten Zeitintervalls $t_2$ abhängig ist.

14. Kraftfahrzeug (100), **dadurch gekennzeichnet, dass** das Kraftfahrzeug (100) eine Leuchtvorrichtung (80) nach einem der Ansprüche 1 bis 7 aufweist.

## Claims

1. Lighting apparatus (80) for a motor vehicle, comprising

    - a light deflection unit (70) which has at least two light deflection elements (60) which can be electronically controlled independently of one another and can be aligned in their spatial orientation via actuation, wherein the light deflection elements (60), in a first actuation position, are designed to deflect light impinging on them in a direction predetermined by their spatial orientation, whereby a first changeable light image (1) having a variable and adjustable light distribution can be provided;
    - a light source (50) by means of which light can be radiated into the light deflection unit (70), wherein the lighting apparatus (80) further comprises a light-shaping element (10), and at least one light deflection element (60) in a second actuation position is designed to deflect light into the light-shaping elements (10),

    **characterized in that**
    the light-shaping element (10) is designed as a projection lens (8) having an upstream demodulation element (5) which comprises at least two light deflection elements which can be electronically actuated independently of one another and can be aligned in their spatial orientation via actuation, and is designed to provide in the same radiated light as a second light image (2) with an always constant light distribution, wherein light radiated into the light deflection unit (70) by the light source (50) is fully used at any point in time for the provision of the first and/or second light image (1, 2).

2. Lighting apparatus (80) according to Claim 1, **characterized in that** the second light image (2) is an ambient light distribution or a daytime driving light signature.

3. Lighting apparatus (80) according to either of the preceding claims, **characterized in that** the light deflection unit (70) is executed as a micro-mirror actuator (70), and the light deflection elements (60) are executed as micro-mirrors (60).

4. Lighting apparatus (80) according to any one of the preceding claims, **characterized in that** light generated by the light source (50) which is not used to provide the first light image (1) is deflected into the light-shaping element (10) by means of at least one light deflection element (60).

5. Lighting apparatus (80) according to Claim 1, **characterized in that** the demodulation element (5) comprises at least one micro-mirror and/or at least one holographic film.

6. Lighting apparatus (80) according to Claim 1, **characterized in that** the demodulation element (5) comprises at least one microlens and/or at least one diffusely radiating medium.

7. Lighting apparatus (80) according to any one of the preceding claims, **characterized in that** the light source (50) is designed as a semiconductor light source (50).

8. Method for controlling a lighting apparatus (80) according to any one of Claims 1 to 7, which method comprises the following method steps:

    - providing the first light image (1) during a first time interval $t_1$;
    - using the light of the light source (50) that is not needed to provide the first light image (1) for the provision of the second light image (2) during the first time interval $t_1$;
    - terminating the provision of the first light image (1);
    - providing the second light image (2) during a second time interval $t_2$ with the entire light of the light source (50);
    - beginning a further iteration of the method with the step of providing the first light image (1).

9. Method according to Claim 8, **characterized in that** the step of providing the second light image (2) further comprises switching off the light source (50) until the expiration of the second time interval $t_2$, wherein the light source (50) is switched off as soon as the second light image (2) exhibits a predetermined brightness.

10. Method according to Claims 8 or 9, **characterized in that** the durations of the first and second time intervals of $t_1$ and $t_2$ are constant across iterations and are respectively selected in the ratio of the light currents required for the provision of the first and second light images (1, 2) and, in each iteration, satisfy the condition $t_1 + t_2 \leq t_g$, wherein $t_g$ corresponds to the duration of a respective iteration of the method.

11. Method according to Claim 10, **characterized in that** the durations of the iterations of the method are identical across iterations, and the duration $t_g$ of an iteration of the method is selected from an interval I, wherein I = [2ms; 7ms].

12. Method according to Claim 8, **characterized in that** the durations of the first and second time intervals $t_1$ and $t_2$ are variable from iteration to iteration, wherein the first time interval $t_1$ of an iteration ends as soon as the first light image (1) is completed, and/or wherein the second time interval $t_2$ of this iteration ends as soon as the ratio of the brightnesses of the first and second light images (1, 2) generated in the iteration reaches a predetermined value, and wherein the durations of the first and second time intervals of $t_1$ and $t_2$ in each iteration satisfy the condition $t_1 + t_2 \leq t_g$, wherein $t_g$ corresponds to the duration of a respective iteration of the method.

13. Method according to Claim 12, **characterized in that** the method further comprises the step of dimming the light source (50) during the second time interval $t_2$, wherein the amount by which the light from the light source (50) is dimmed is dependent on the ratio of the duration of the first time interval of $t_1$ and the duration of the second time interval $t_2$.

14. Motor vehicle (100), **characterized in that** the motor vehicle (100) comprises a lighting apparatus (80) according to any one of Claims 1 to 7.

**Revendications**

1. Dispositif d'éclairage (80) pour un véhicule automobile, comprenant,

- une unité de déviation de la lumière (70), pourvue d'au moins deux éléments de déviation de la lumière (60) qui peuvent être commandés électroniquement indépendamment l'un de l'autre et orientés en fonction de la commande dans leur orientation spatiale, les éléments de déviation de la lumière (60), dans une première position de commande, étant conçus pour dévier la lumière qui vient les frapper dans une direction prédéfinie par leur orientation spatiale, ce qui permet de produire une première image lumineuse (1) modifiable possédant une distribution lumineuse variable et réglable ;
- une source de lumière (50), par le biais de laquelle de la lumière peut être projetée dans l'unité de déviation de la lumière (70), le dispositif d'éclairage (80) comprenant en outre un élément de mise en forme de la lumière (10) et au moins un élément de déviation de la lumière (60), dans une deuxième position de commande, étant conçu pour dévier la lumière dans l'élément de mise en forme de la lumière (10),

**caractérisé en ce que**
l'élément de mise en forme de la lumière (10) est conçu comme une lentille de projection (8) pourvue d'un élément de démodulation (5) amont, qui comprend au moins deux éléments de déviation de la lumière qui peuvent être commandés électroniquement indépendamment l'un de l'autre et orientés en fonction de la commande dans leur orientation spatiale et est conçu pour fournir cette lumière projetée sous la forme d'une deuxième image lumineuse (2) possédant une distribution lumineuse toujours constante, la lumière projetée par la source de lumière (50) dans l'unité de déviation de la lumière (70) étant utilisée à chaque instant pleinement pour la fourniture de la première et/ou de la deuxième image lumineuse (1, 2).

2. Dispositif d'éclairage (80) selon la revendication 1, **caractérisé en ce que** la deuxième image lumineuse (2) est constituée par une distribution lumineuse de base ou une signature de feu diurne.

3. Dispositif d'éclairage (80) selon l'une quelconque des revendications précédentes, **caractérisé en ce que** l'unité de déviation de la lumière (70) est conçue comme une matrice de micro-miroirs (70) et les éléments de déviation de la lumière (60) sont conçus comme des micro-miroirs (60).

4. Dispositif d'éclairage (80) selon l'une quelconque des revendications précédentes, **caractérisé en ce que** la lumière générée par la source de lumière (50), qui n'est pas utilisée pour la fourniture de la première image lumineuse (1), est renvoyée au moyen d'au moins un élément de déviation de la lumière (60) dans l'élément de mise en forme de la lumière (10).

5. Dispositif d'éclairage (80) selon la revendication 1, **caractérisé en ce que** l'élément de démodulation (5) comprend au moins un micro-miroir et/ou au moins une feuille holographique.

6. Dispositif d'éclairage (80) selon la revendication 1, **caractérisé en ce que** l'élément de démodulation (5) comprend au moins une micro-lentille et/ou au moins un milieu à rayonnement diffus.

7. Dispositif d'éclairage (80) selon l'une quelconque des revendications précédentes, **caractérisé en ce que** la source de lumière (50) est conçue sous la forme d'une source de lumière à semi-conducteurs (50).

8. Procédé de commande d'un dispositif d'éclairage (80) selon l'une quelconque des revendications 1 à 7, comprenant les étapes de procédé suivantes :

    - fourniture d'une première image lumineuse (1) pendant un premier intervalle de temps $t_1$ ;
    - utilisation de la lumière de la source de lumière (50) non utilisée pour la fourniture de la première image lumineuse (1) pour la fourniture de la deuxième image lumineuse (2) pendant le premier intervalle de temps $t_1$ ;
    - arrêt de la fourniture de la première image lumineuse (1) ;
    - fourniture de la deuxième image lumineuse (2) pendant un deuxième intervalle de temps $t_2$ avec l'ensemble de la lumière de la source de lumière (50) ;
    - début d'une itération supplémentaire du procédé avec l'étape de fourniture de la première image lumineuse (1).

9. Procédé selon la revendication 8, **caractérisé en ce que** l'étape de fourniture de la deuxième image lumineuse (2) comprend en outre la coupure de la source de lumière (50) jusqu'à ce que le deuxième intervalle de temps $t_2$ soit écoulé, la coupure de la source de lumière (50) ayant lieu dès que la deuxième image lumineuse (2) présente une luminosité prédéfinie.

10. Procédé selon la revendication 8 ou 9, **caractérisé en ce que** les durées des premier et deuxième intervalles de temps $t_1$ et $t_2$ sont constantes sur toutes les itérations et sont respectivement choisies par rapport aux flux lumineux requis pour la fourniture des première et deuxième images lumineuses (1, 2) et satisfont, pour chaque itération, la condition $t_1 + t_2 \leq t_g$, $t_g$ correspondant à la durée d'une itération respective du procédé.

11. Procédé selon la revendication 10, **caractérisé en ce que** les durées des itérations du procédé sont identiques sur toutes les itérations et la durée $t_g$ d'une itération du procédé est choisie dans un intervalle I, dans lequel I = [2 ms ; 7 ms].

12. Procédé selon la revendication 8, **caractérisé en ce que** les durées des premier et deuxième intervalles de temps $t_1$ et $t_2$ sont variables d'une itération à l'autre, le premier intervalle de temps $t_1$ terminant une itération, dès que la première image lumineuse (1) est totalement construite et/ou le deuxième intervalle de temps $t_2$ terminant cette itération dès que le rapport des luminosités des première et deuxième images lumineuses (1, 2) produites dans l'itération, atteint une valeur prédéfinie et les durées des premier et deuxième intervalles de temps $t_1$ et $t_2$ satisfaisant, pour chaque itération, la condition $t_1 + t_2 \leq t_g$, $t_g$ correspondant à la durée respective d'une itération du procédé.

13. Procédé selon la revendication 12, **caractérisé en ce que** le procédé comprend en outre l'étape de gradation de la source de lumière (50) pendant le deuxième intervalle de temps $t_2$, la quantité de gradation de la lumière de la source de lumière (50) dépendant du rapport de la durée du premier intervalle de temps $t_1$ à la durée du deuxième intervalle de temps $t_2$.

14. Véhicule automobile (100), **caractérisé en ce que** le véhicule automobile (100) présente un dispositif d'éclairage (80) selon l'une quelconque des revendications 1 à 7.

FIG. 1

FIG. 2

FIG. 3

FIG. 4

FIG. 5

FIG. 6

FIG. 7

FIG. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10344173 A1
- US 6497503 B1
- DE 102010048659 A1
- US 20040218401 A1
- CN 202419429 U